(19) Europäisches Patentamt
European Patent Office
Office européen des brevets

(11) **EP 1 870 888 A2**

(12) **EUROPEAN PATENT APPLICATION**

(43) Date of publication:
26.12.2007 Bulletin 2007/52

(51) Int Cl.:
***G11B 7/135*** (2006.01)

(21) Application number: 07012069.6

(22) Date of filing: 20.06.2007

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **21.06.2006 JP 2006171800
03.10.2006 JP 2006272244**

(71) Applicant: **Sharp Kabushiki Kaisha
Osaka-shi, Osaka 545-8522 (JP)**

(72) Inventor: **Horiyama, Makoto
Nara-shi
Nara 630-8133 (JP)**

(74) Representative: **Müller - Hoffmann & Partner
Patentanwälte,
Innere Wiener Strasse 17
81667 München (DE)**

(54) **Optical pick-up**

(57) It is an object of the present invention to realize stable tracking control even in a structure including an objective lens (25) whose center is offset from a central line (21) extending from the central axis of an optical disk in the direction of the axis along which an optical pick-up is moved. An optical pick-up of the present invention includes a second optical system (2) having (i) a light source (21) for emitting a beam, (ii) a second diffraction grating (23) for splitting, into three beams MB, SB1, and SB2, the beam emitted from the light source, (iii) a second objective lens (25) for converging the three beams on an optical disk, and (iv) a photodetector (28) for detecting a push-pull signal from reflected light obtained by reflecting the three beams. The second objective lens is placed in an offset position offset from a central line. The second diffraction grating has a lattice structure plane that gives a phase difference to a light beam passing through the second diffraction grating, and the lattice structure plane is designed so that the amplitude of a push-pull signal detected from reflected light obtained by reflecting SB1 and SB2 is substantially 0.

FIG. 1

EP 1 870 888 A2

**Description**

FIELD OF THE INVENTION

The present invention relates to optical pick-ups. More specifically, the present invention relates to an optical pick-up for optically recording or reproducing information with respect to an optical recording medium such as an optical disk.

BACKGROUND OF THE INVENTION

Since optical disks makes it possible to record a large amount of information with high density, they have been increasingly used recently in a large number of fields such as the field of audio, the field of video, and the field of computer. A recent recording and reproducing apparatus records and reproduces information with respect to a plurality of optical disks such as a BD (Blu-ray Disc), a DVD, a CD, and the like.

Such a recording and reproducing apparatus is large in size; therefore, recording and reproduction of information with respect to a plurality of optical disks are realized by arranging the apparatus so that it separately includes an optical pick-up corresponding to a BD and an optical pick-up corresponding to a DVD/CD.

Meanwhile, in case of an electronic apparatus, such as a laptop computer, into which a thin and small optical disk drive needs to be incorporated, there is such a problem that it is very difficult to dispose, in such an electronic apparatus, an optical system, such as that described above, in which an optical pick-up corresponding to a BD and an optical pick-up corresponding to a DVD/CD are separated from each other. In order to solve this problem, an optical pick-up, arranged so as to include two objective lenses for example, which corresponds to a plurality of optical disks is disclosed, for example, in Patent Document 1 (Japanese Patent No. 2626205 (*Tokkyo* 2626205; registered on April 11, 1997)).

The optical pick-up disclosed in Patent Document 1 is described with reference to Fig. 26. Fig. 26 is a diagram schematically showing a structure of the optical pick-up disclosed in Patent Document 1. Note that Reference Numeral 69 shown in Fig. 26 indicates two optical disks having different cover layers.

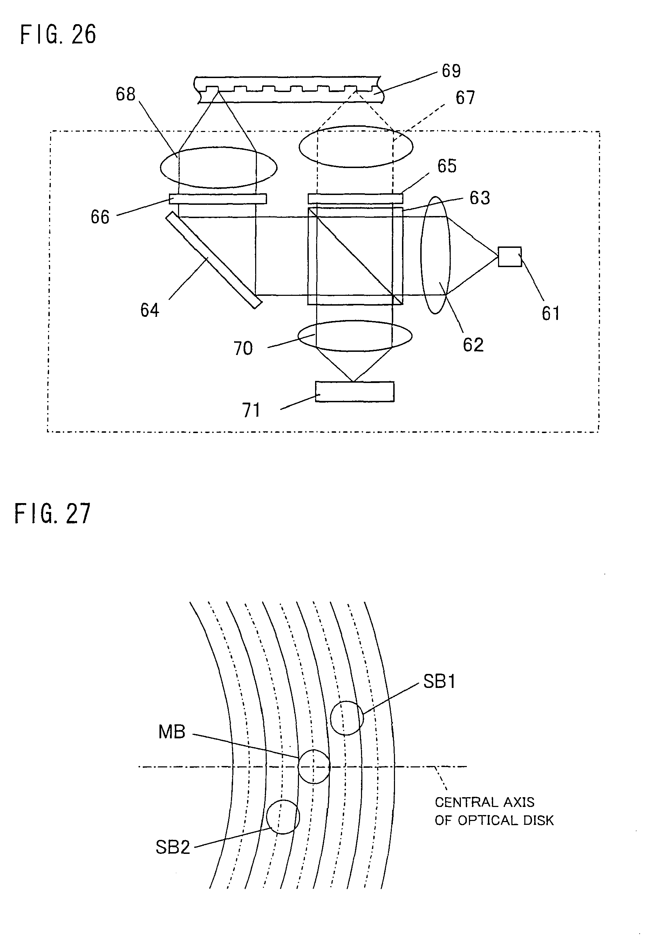

As shown in Fig. 26, light emitted from a light source 61 is converted into parallel light by a collimator lens 62, and then is split into two beams by a beam splitter 63. One of the two beams is a beam reflected by the beam splitter 63. This beam passes through a quarter wavelength plate 65, and then is converged on an optical disk 69 via an objective lens 67.

On the other hand, the other one of the two beams thus split from each other by the beam splitter 63 is a beam transmitted by the beam splitter 63. This beam is reflected by a mirror 64, passes through a quarter wavelength plate 66, and then is converged on the optical disk 69 via an objective lens 68. Note that: the objective lens 67 and the objective lens 68 have different numerical apertures (NA), and therefore can converge light on optical disks whose cover layers differ from each other in thickness, respectively. The light reflected from the optical disk 69 is converged by a converging lens 70, and then is converged on a photodetector 71.

Further, in general, a conventional optical pick-up employs a DPP (differential push-pull) method in performing tracking control for causing a beam spot to follow a disk groove (track) of an optical disk. The DPP method is disclosed, for example, in Patent Document 2 (Japanese Unexamined Patent Publication No. 93764/ 1995 *(Tokukaihei* 7-93764; published on April 7, 1995)). According to the DPP method, a diffraction grating is provided in a light path extending from a light source to an optical disk. The DPP method is a tracking method that uses three beams: (i) a zeroth-order diffracted light beam serving as a main beam, (ii) a positive first-order diffracted light beam serving as a sub-beam, and (iii) a negative first-order diffracted light beam serving as a sub-beam.

Fig. 27 is a diagram showing the respective states of (i) a spot of a zeroth-order diffracted light beam sent upon an optical disk and (ii) a spot of a positive first-order diffracted light beam sent upon the optical disk, and (iii) a spot of a negative first-order diffracted light beam sent upon the optical disk. According to the DPP method, a spot of a main beam (hereinafter abbreviated as "MB") constituting the zeroth-order diffracted light beam is subjected to tracking control so as to be positioned in the width-direction center of a track on which information is to be recorded or of a track on which information to be reproduced is recorded. On this occasion, a spot of a first sub-beam (hereinafter abbreviated as "SB1") constituting the positive first-order diffracted light beam and a spot of a second sub-beam (hereinafter abbreviated as "SB2") constituting the negative first-order diffracted light beam are respectively positioned on both sides of the track on which the spot of MB is positioned (i.e., are positioned so as to be symmetric with respect to the spot of MB). Moreover, each of the spot of SB1 and the spot of SB2 is positioned so as to be displaced by a half track pitch with respect to the track on which the spot of MB is positioned.

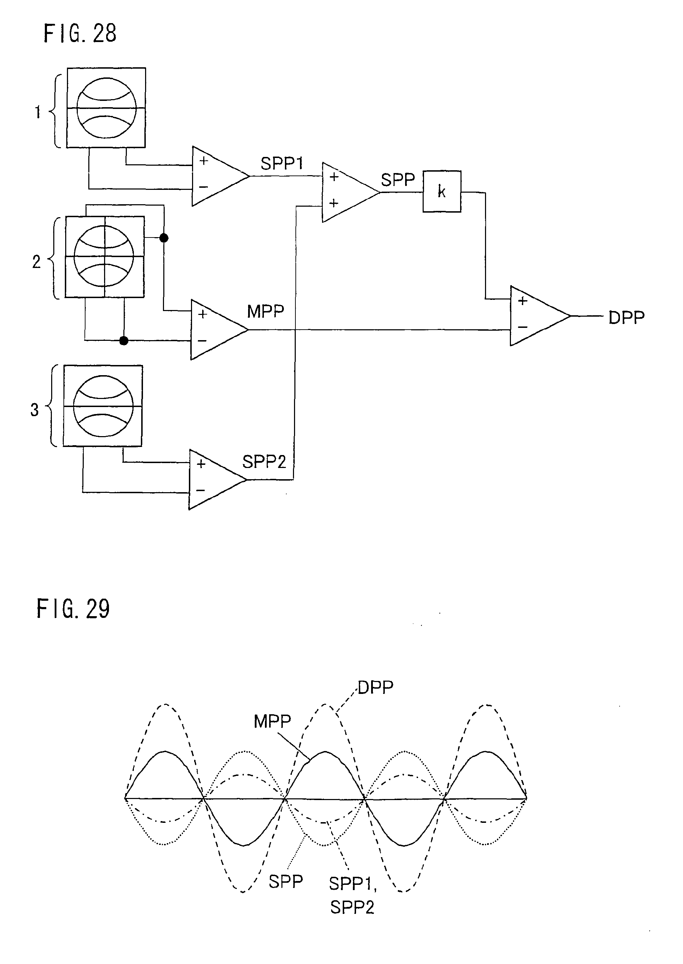

The MB, the SB1, and the SB2 each sent upon the optical disk are reflected, and then are received by a photodetector. Fig. 28 is a diagram schematically showing a circuit for calculating a tracking signal according to signals detected by the photodetector and according to the DPP method.

As shown in Fig. 28, the photodetector includes three light-receiving sections 1, 2, and 3. The light-receiving section 2 receives MB, and the light-receiving sections 1 and 3 receive SB 1 and SB2, respectively. The light-receiving section 2 has four light-receiving elements divided from one another by (i) a dividing line parallel to a direction in which a track formed in an optical disk to be placed in the optical pick-up extends (such a direction being hereinafter referred to as "track direction") and (ii) a dividing line extending in a direction orthogonal to the track direction. Each of the light-receiving sections 1 and 3 has two light-receiving elements divided from each other by a dividing line extending in a direction perpendicular to the track direction.

The light-receiving section 2 detects a signal upon receiving MB, and sends the signal to a subtracter, which then outputs a push-pull signal MPP (Main Push Pull) of MB. The light-receiving section 1 detects a signal upon receiving SB1, and sends the signal to a subtracter, which then outputs a push-pull signal SPP1 (Sub Push Pull-1) of SB1. The light-receiving section 3 detects a signal upon receiving SB2, and sends the signal to a subtracter, which then outputs a push-pull signal SPP2 (Sub Push Pull-2) of SB2. Moreover, the push-pull signal SPP1 and the push-pull signal SPP2 are sent to an adder, and the adder outputs an addition signal SPP (=SPP1+SPP2). The DPP signal is calculated by a subtracter in accordance with (i) a signal obtained by amplifying the addition signal SPP with an amplifier and (ii) the aforementioned push-pull signal MPP. That is, the DPP signal is given according to the following formula:

$$DPP = MPP - k(SPP1 + SPP2)$$

Here, k is a gain in the amplifier, and is a coefficient for use in correction of a difference in light intensity between the zeroth-order diffracted light beam and the positive and negative first-order diffracted light beams. The coefficient k is given according to k=a/(2b) on the assumption that the ratio of the light intensity of the zeroth-order diffracted light beam to the light intensity of the positive first-order diffracted light beam to the light intensity of the negative first-order diffracted light beam is a:b:b.

As described above, the spot of SB 1 and the spot of SB2 are respectively positioned on both sides of the track on which the spot of MB is positioned (i.e., are positioned so as to be symmetric with respect to the spot of MB). Moreover, each of the spot of SB1 and the spot of SB2 is positioned so as to be displaced by a half track pitch with respect to the track on which the spot of MB is positioned. For this reason, the push-pull signal SPP1 and the push-pull signal SPP2 are out of phase by 180 degrees with respect to the push-pull signal MPP.

Fig. 29 is a wave form chart showing examples of push-pull signals detected according to the DPP method. As shown in Fig. 29, since the push-pull signal SPP1 and the push-pull signal SPP2 are equal to each other in light intensity, the push-pull signal SPP1 and the push-pull signal SPP2 coincide with each other in waveform. Further, the push-pull signal MPP and the push-pull signal SPP are in phase opposition, i.e., are out of phase by 180 degrees with respect to each other. Therefore, the DPP signal is obtained by adding the absolute value of the amplitude of the push-pull signal MPP and the absolute value of the amplitude of the push-pull signal SPP together.

However, in cases where the optical pick-up, described in Patent Document 1, which includes two objective lenses employs the DPP method in performing tracking control, there occurs such a problem as described below.

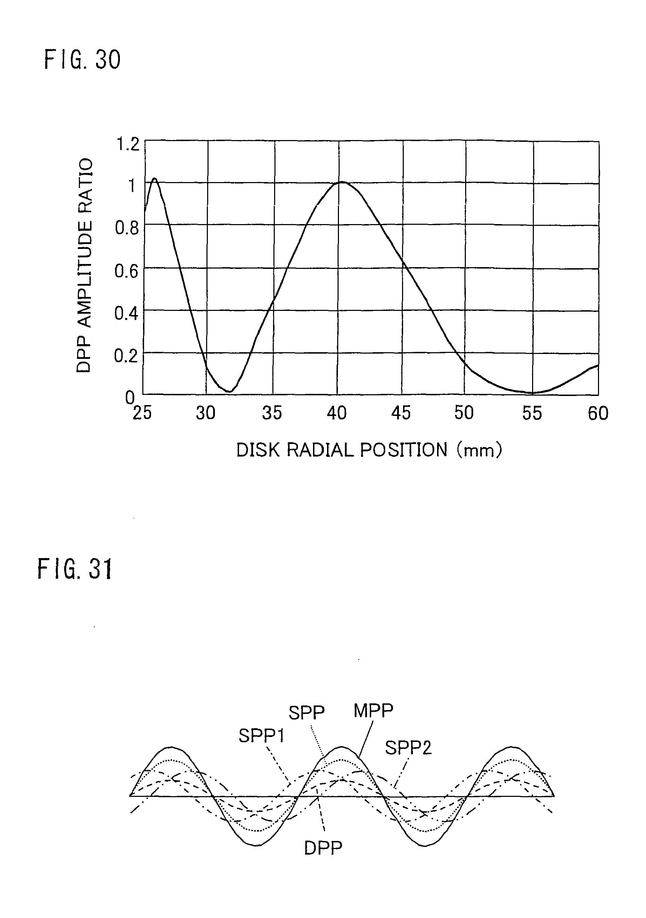

In the optical pick-up, described in Patent Document 1, which includes two objective lenses, one of the two objective lenses is disposed so that its center falls on a central line extending from the central axis of the optical disk in the direction of the axis along which the optical pick-up is moved (such one of the objective lenses being hereinafter referred to as "first objective lens"). On the other hand, the other one of the objective lenses is disposed so as to be offset (displaced) from the central line (such other one of the objective lenses being hereinafter referred to as "second objective lens"). For this reason, the amplitude of the DPP signal obtained from the respective spots of MB, SB1, and SB2 each converged by the second objective lens is unstable between the inner circumference and the outer circumference of the optical disk. This causes a problem of destabilization of tracking control on the respective spots of MB, SB1, and SB2 each converged by the second objective lens. This problem will be described below with reference to Figs. 30 through 32.

Fig. 30 is a graph showing a change in amplitude of a DPP signal detected when a spot of light converged by the second objective lens is moved from the inner circumference to the outer circumference of the optical disk (in a radial direction). Note that the horizontal axis represents a radial position falling on a line extending from the center of the optical disk in the radial direction. Further, Fig. 30 shows a result that is obtained when the track pitch of an optical disk is 0.74 μm and the distance between a main beam and a sub-beam is 15 μm. Further, the rotation of a diffraction grating is adjusted at a disk radial position of 40 mm so that MB is in phase opposition with respect to SB1 and SB2. The DPP amplitude ratio shown in Fig. 30 is obtained by dividing (i) DPP amplitude obtained at each radial position by (ii) DPP amplitude obtained at a disk radial position of 40 mm.

As shown in Fig. 30, the amplitude ratio of the DPP signal (DPP amplitude ratio) is greatly changed depending on the change in radial position on the optical disk. In particular, almost no signal amplitude of DPP is obtained around a radial position of 32 mm or around a radial position of 55 mm. For this reason, tracking control may not be performed depending on the radial position on the optical disk.

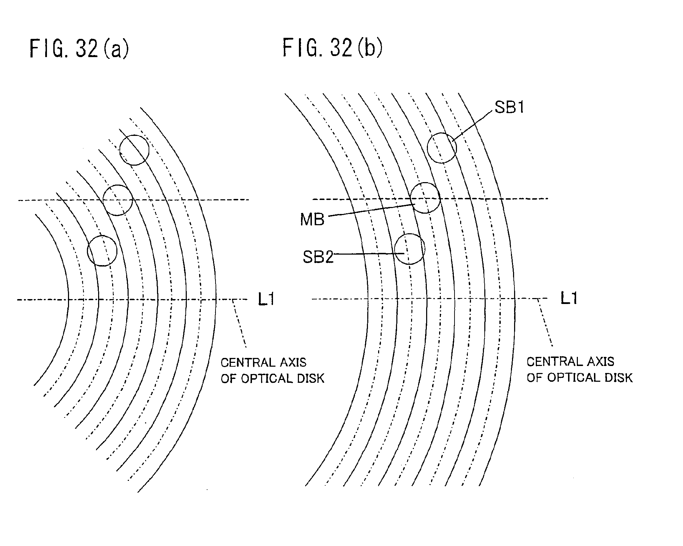

The reason for this will be described below with reference to Figs. 32(a) and 32(b). Figs. 32(a) and 32(b) are pattern diagrams showing examples of the disposition of the respective spots of MB, SB1, and SB2 each converged on the optical disk by the second objective lens.

As shown in Figs. 32(a) and 32(b), the position of the spot of SB1 and the position of the spot of SB2 are easily influenced by the radius of curvature of the optical disk. Therefore, at some radial positions located between the inner circumference and the outer circumference of the optical disk, the spot of SB 1 and the spot of SB2 are not so positioned respectively on both sides of the track on which the spot of MB is positioned as to be displaced by a half track pitch from the track.

Fig. 31 is a wave form chart showing signals obtained from the respective spots of MB, SB1, and SB2 each converged on the optical disk by the second objective lens. As shown in Fig. 31, a change in radial position causes a change in phase of MPP, SPP1, and SPP2. That is, MPP and SPP are no longer in phase opposition. As a result, the DPP signal obtained from the respective spots of MB, SB1, and SB2 each converged on the optical disk by the second objective lens is destabilized, thereby deteriorating in amplitude.

This problem is not limited to an arrangement in which two objective lenses are provided, but is generally encountered by an optical pick-up including an objective lens whose center is offset from a central line extending from the central axis of an optical disk in the direction of the axis along which the optical pick-up is moved.

SUMMARY OF THE INVENTION

The present invention has been made in view of the foregoing problems, and it is an object of the present invention to provide an optical pick-up that allows for stable tracking control even when arranged so as to include an objective lens whose center is offset from a central line extending from the central axis of an optical disk in the direction of the axis along which the optical pick-up is moved.

In order to solve the foregoing problems, an optical pick-up of the present invention is an optical pick-up capable of moving in a radial direction of an optical recoding medium, the optical pick-up including: a first optical system having (i) a first light source which emits a first beam having a first wavelength, (ii) a first converging element which converges the first beam on the optical recording medium, and (iii) a first photodetector which detects a push-pull signal from reflected light obtained when the first beam is reflected by the optical recording medium; and a second optical system having (a) a second light source which emits a second beam having a second wavelength, (b) a second converging element which converges the second beam on the optical recording medium, and (c) a second photodetector which detects a push-pull signal from reflected light obtained when the second beam is reflected by the optical recording medium, whereas the first converging element is placed on a central line so drawn as to extend in the radial direction in which the optical pick-up is moved from a central axis of the optical recording medium, the second converging element being placed in an offset position offset from the central line, at least either of the first optical system and the second optical system having a diffraction element provided in a light path via which the beam is converged on the optical recording medium, which diffraction element splits the beam into a main beam and at least one sub-beam, the diffraction element having a phase shift region that gives a phase difference to the beam passing through the diffraction element. Further, the optical pick-up of the present invention is preferably arranged such that the phase shift region is designed so that amplitude of a push-pull signal detected form reflected light obtained by reflecting the sub-beam is substantially 0.

In the optical pick-up of the present invention, whereas the first converging element is placed on a central line so drawn as to extend in the radial direction in which the optical pick-up is moved from a central axis of the optical recording medium, the second converging element is placed in an offset position offset from the central line. Conventionally, in an optical pick-up including such first and second optical systems, the amplitude of a tracking error signal obtained from respective spots of a main beam and a sub-beam each converged by a converging element placed in an offset position is unstable between the inner circumference and the outer circumference of an optical recording medium. This has caused a problem of destabilization of tracking control. This problem is attributed to the following fact: The position of the spot of the sub-beam becomes likely to be influenced by the radius of curvature of the optical recording medium and the positional relationship between the spot of the main beam and the spot of the sub-beam becomes unstable at a radial position where the optical pick-up is radially moved from the inner circumference to the outer circumference of the optical recording medium, so that a push-pull signal detected from reflected light obtained by reflecting the main beam and a push-pull signal detected from reflected light obtained by reflecting the sub-beam are never in phase opposition with respect to each other between the inner circumference to the outer circumference of the optical recording medium.

According to the foregoing arrangement, at least either of the first optical system and the second optical system is provided with a diffraction element, positioned in a light path via which the beam is converged on the optical recording medium, which splits the beam into a main beam and at least one sub-beam. The diffraction element has a phase shift region that gives a phase difference to the beam passing through the diffraction element. The phase shift region is designed so that the amplitude of a push-pull signal detected form reflected light obtained by reflecting the sub-beam is substantially 0. Therefore, the amplitude of the push-pull signal detected from the reflected light obtained by reflecting the sub-beam stays substantially 0 between the inner circumference to the outer circumference of the optical recording medium.

Therefore, according to the foregoing arrangement, the amplitude of a tracking error signal obtained from respective spots of a main beam and a sub-beam each converged on a converging element placed in an offset position is stable between the inner circumference to the outer circumference of an optical recording medium. This makes it possible to realize stable tracking control.

The foregoing describes the arrangement in which the second optical system including the second converging element placed in the offset position is provided with the diffraction element having the phase shift region. However, the optical pick-up of the present invention may be arranged such that the first optical system including the first converging element placed on the central line is provided with the diffraction element. In cases where the first optical system is provided with the diffraction element, it is possible to increase the amount by which the position of the first converging element is allowed to be adjusted so that the first converging element is positioned on the central line.

Additional objects, features, and strengths of the present invention will be made clear by the description below. Further, the advantages of the present invention will be evident from the following explanation in reference to the drawings.

BRIEF DESCRIPTION OF THE DRAWINGS

Fig. 1 is a plan view schematically showing a structure of an optical information recording apparatus including an optical pick-up of Embodiment 1.

Fig. 2 is a plan view showing a lattice plane of a first diffraction grating by which a beam emitted from a first optical light source is split into three beams.

Fig. 3 is a plan view showing a lattice plane of a second diffraction grating for use in cases where a phase shift DPP method is employed.

Fig. 4(a) shows signals outputted at a radial position of 40 mm on a first optical disk.

Fig. 4(b) shows signals outputted at a radial position of 25 mm on the first optical disk.

Fig. 5 is a graph showing a change in amplitude of DPP, which change is caused when the optical pick-up shown in Fig. 1 is moved from the inner circumference to the outer circumference of the first optical disk in a radial direction.

Figs. 6(a) is a wave form chart showing push-pull signals obtained from respective spots of MB, SB1, and SB2 each converged on a second optical disk, and shows signals outputted at a radial position of 40 mm on the second optical disk.

Fig. 6(b) is a wave form chart showing push-pull signals obtained from the respective spots of MB, SB1, and SB2 each converged on the second optical disk, and shows signals outputted at a radial position of 25 mm on the second optical disk.

Fig. 7 is a graph showing a change in amplitude of DPP, which change is caused when the optical pick-up shown in Fig. 1 is moved from the inner circumference to the outer circumference of the second optical disk in the radial direction (x-axis direction).

Fig. 8 is a plan view schematically showing a structure of an optical information recording apparatus including an optical pick-up of Embodiment 2.

Fig. 9 is a plan view showing a hologram pattern formed on a hologram element provided in the optical pick-up shown in Fig. 8.

Fig. 10 is an explanatory diagram illustrating shapes respectively taken by light-receiving sections of a photodetector when the hologram shown in Fig. 9 is used and calculations made when the hologram shown in Fig. 9 is used.

Fig. 11 is a plan view schematically showing a structure of an optical information recording apparatus including an optical pick-up of Embodiment 3.

Fig. 12 is a plan view schematically showing a structure of an optical information recording apparatus including an optical pick-up of Embodiment 4.

Fig. 13 is a plan view schematically showing a structure of an optical information recording apparatus including an optical pick-up of Embodiment 5.

Fig. 14 is a plan view schematically showing a structure of an optical information recording apparatus including an optical pick-up of Embodiment 6.

Fig. 15 is a plan view schematically showing a structure of an optical information recording apparatus including an optical pick-up of Embodiment 7.

Fig. 16 is an explanatory diagram illustrating a hologram pattern of a second polarization hologram element for use in the optical pick-up shown in Fig. 15.

Fig. 17 is an explanatory diagram illustrating a hologram pattern of a first polarization hologram element for use in the optical pick-up shown in Fig. 15.

Fig. 18(a) is a diagram showing a beam of light so converged on a photodetector as to be focused on a recording layer of an optical disk in such a state that the position of a collimator lens is adjusted in an optical-axis direction lest a beam of light converged by a first objective lens has any spherical aberration with respect to the thickness of a cover layer of the optical disk.

Fig. 18(b) is a diagram showing a beam of light converged on the photodetector in cases where the first objective lens is moved toward the optical disk.

Fig. 19 is a plan view schematically showing a structure of an optical information recording apparatus including an optical pick-up of Embodiment 8.

Fig. 20 is a schematic diagram showing a light path of an optical pick-up of Embodiment 9.

Fig. 21 is an explanatory diagram illustrating a hologram pattern of a hologram element for use in the optical pick-up shown in Fig. 20.

Fig. 22 is an explanatory diagram illustrating shapes respectively taken by light-receiving sections of a photodetector when the hologram shown in Fig. 21 is used and calculations made when the hologram shown in Fig. 21 is used.

Fig. 23 is a schematic diagram showing a light path of an optical pick-up of Embodiment 10.

Fig. 24 is an explanatory diagram illustrating a hologram pattern of a hologram element for use in the optical pick-up shown in Fig. 23.

Fig. 25 is an explanatory diagram illustrating shapes respectively taken by light-receiving sections of a photodetector when the hologram shown in Fig. 24 is used and calculations made when the hologram shown in Fig. 24 is used.

Fig. 26 is a diagram schematically showing a structure of a conventional optical pick-up.

Fig. 27 is a diagram showing the respective states of (i) a spot of a zeroth-order diffracted light beam sent upon an optical disk and (ii) a spot of a positive first-order diffracted light beam sent upon the optical disk, and (iii) a spot of a negative first-order diffracted light beam sent upon the optical disk.

Fig. 28 is a diagram schematically showing a circuit for calculating a tracking signal according to signals detected by a photodetector and according to a DPP method.

Fig. 29 is a wave form chart showing examples of push-pull signals detected according to the DPP method.

Fig. 30 is a graph showing a change in amplitude of a DPP signal detected when a spot of light converged by a second objective lens provided in the conventional optical pick-up is moved from the inner circumference to the outer circumference of an optical disk (in a radial direction).

Fig. 31 is a wave form chart showing signals obtained from the respective spots of MB, SB1, and SB2 each converged on the optical disk by the second objective lens.

Figs. 32(a) is a pattern diagram showing an example of the disposition of the respective spots of MB, SB1, and SB2 each converged on the optical disk by the second objective lens.

Fig. 32(b) is a pattern diagram showing another example of the disposition of the respective spots of MB, SB1, and SB2 each converged on the optical disk by the second objective lens.

DESCRIPTION OF THE EMBODIMENTS

[Embodiment 1]

An optical pick-up of the present embodiment (hereinafter referred to as "present optical pick-up") is incorporated into an optical information recording and reproducing apparatus that can write information in and read out information from a plurality of optical disks (optical recording media) such as a BD (Blu-ray Disc), a DVD, and a CD by irradiating the optical disks with beams. Specifically, the present optical pick-up is an optical pick-up, having a plurality of objective lenses and a plurality of light sources, which is capable of accurate tracking control.

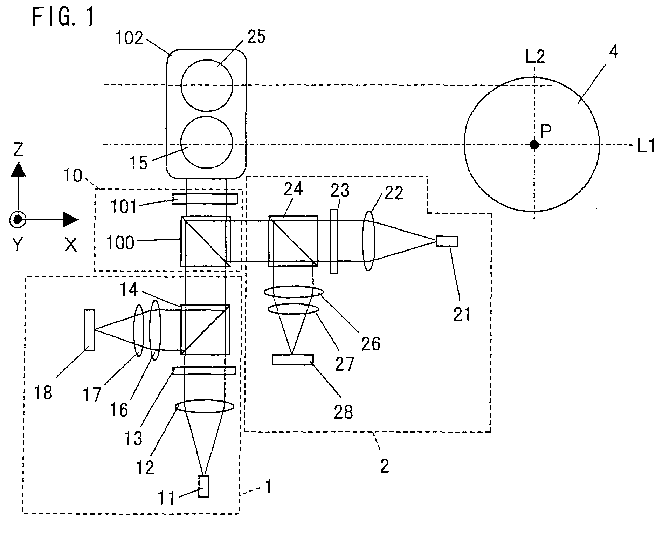

An embodiment of the present invention will be described below with reference to Figs. 1 through 7. Fig. 1 is a plan view schematically showing a structure of an optical information recording apparatus (hereinafter referred to as "present optical information recording and reproducing apparatus) including an optical pick-up of the present embodiment (hereinafter referred to as "present optical pick-up").

As shown in Fig. 1, the present optical information recording and reproducing apparatus includes moving means (not shown) for moving the present optical pick-up in a radial direction (x direction) of an optical recording medium and a spindle motor 4 for rotating the optical recording medium. In Fig. 1, the rotation axis P of the spindle motor 4 is indicated by a point of intersection between the dashed lines L1 and L2 orthogonal to each other. The dashed line L1 is a central line that runs through the rotation axis of the optical recording medium and extends in the x direction. Note that the following drawings assume that the radial direction of the optical recording medium in which radial direction the optical pick-up can be moved is an x-axis direction, that a focus direction perpendicular to the x-axis direction is a y-axis direction, and that a track direction of the optical pick-up which track direction is perpendicular to the x-axis direction and the y-axis direction is a z-axis direction.

Further, an objective lens holder 102 is provided with a first objective lens 15 and a second objective lens 25. The first objective lens 15 is used for converging light on a first optical disk (first optical recording medium). The second objective lens 25 is used fro converging light on a second optical disk (second optical recording medium). Note that the first optical disk and the second optical disk have different cover layers. As shown in Fig. 1, the first objective lens 15 is disposed so that its center falls on the central line L1, as seen from the y-axis direction; meanwhile, the second objective lens 25 is disposed so that its center is offset (displaced) from the central line L1. Further, the first objective lens 15 and the second objective lens 25 are provided within the same x-z plane.

The first objective lens 15 and the second objective lens 25 are positioned with respect to each other such that whereas a line drawn so as to run through the center of the first objective lens 15 in parallel with the x-axis direction intersects with the rotation axis of the spindle motor 4 (the rotation axis of the optical recording medium), a line drawn so as to run through the center of the second objective lens 25 in parallel with the x-axis direction does not intersect with the rotation axis of the spindle motor 4 (the axis of rotation of the optical recording medium).

In such an optical pick-up including two objective lenses, the amplitude of a DPP signal obtained from respective spots of MB, SB1, and SB2 each converged by a second objective lens is unstable between the inner circumference to the outer circumference of an optical disk. This causes a problem of destabilization of tracking control on the respective spots of MB, SB1, and SB2 each converged by the second objective lens.

The present optical pick-up employs a phase shift DPP method in tracking control performed by a second optical system including the second objective lens, thereby solving the foregoing problem. The following describes a specific arrangement of the present optical pick-up.

The present optical pick-up includes a first optical system 1 including the first objective lens 15, the second optical system 2 including the second objective lens 25, and a common optical system 10. In the present optical pick-up, a beam emitted from the first optical system 1 and a beam emitted from the second optical system 2 enter the common optical system 10.

The first optical system 1 includes a light source (first light source) 11, a collimator lens 12, a first diffraction grating (first diffraction element) 13, a polarizing beam splitter 14, the first objective lens (first converging element) 15, a converging lens 16, a cylindrical lens 17, and a photodetector (first photodetector) 18.

As shown in Fig. 1, a beam emitted from the light source 11 is converted into parallel light by the collimator lens 12. Then, this beam is split by the first diffraction grating 13 into three beams: a zeroth-order light beam (MB) for use in performing recording or reproduction with respect to the first optical disk and positive and negative first-order light beams (SB1 and SB2) both for use in generation of a tracking error signal. The three beams thus split from one another by the first diffraction grating 13 pass through the polarizing beam splitter 14, and then enter the common optical system 10.

The common optical system 10 includes a dichroic prism 100 and a quarter wavelength plate 101. The three beams having entered the common optical system 10 after having passed through the polarizing beam splitter 14 of the first optical system 1 pass through the dichroic prism 100, and then are converted from linearly-polarized light into circularly-polarized light by the quarter wavelength plate 101. Then, the three beams are reflected by a start-up mirror (not shown), and then are converged on the first optical disk via the first objective lens 15. Note that the dichroic prism 100 functions so that a beam from the second optical system described later is guided in the same optical-axis direction as the beam from the first optical system travels.

The beams converged on the first optical disk are reflected, and then become return light that returns to the first optical system 1. The return light passes through the first objective lens 15, and then is converted from circularly-polarized light into linearly-polarized light by the quarter wavelength plate 101 of the common optical system 10. Then, the return light enters the first optical system 1 after having passed through the dichroic prism 100. In the first optical system 1, the return light is bent by the polarizing beam splitter 14 to a light path of an optical axis different from the axis of the emitted light (the optical axis of the beam emitted from the light source 11). Then, the return light is converged on the photodetector 18 after having passed through the converging lens 16 and the cylindrical lens 17. Note that: the converging lens 16 is used for converging the return light on the photodetector 18, and the cylindrical lens 17 is used for causing astigmatism in the return light. In the present optical pick-up, the return light reflected from the first optical disk is detected by the photodetector 18, so that a focus error signal, a tracking error signal, and a reproduction signal each generated at the time of performing recording or reproduction with respect to the first optical disk are obtained.

In the present optical pick-up, the light source 11 is a short-wavelength light source that emits a beam having a wavelength of approximately 405 nm, and the first objective lens 15 is a high NA objective lens having an NA of approximately 0.85. This makes it possible to record and reproduce information on a track in the first optical disk with high density. However, the light source 11 and the first objective lens 15 are not limited to these arrangements.

Further, in cases where the light source 11 is a short-wavelength light source and the first objective lens 15 is a high NA objective lens, an error in thickness of the cover layer of the first optical disk causes a large spherical aberration. In view of this, in order to correct the spherical aberration caused due to the error in thickness of the cover layer, the present optical pick-up may be arranged so as to include a collimator lens driving mechanism (not shown) for adjusting the position of the collimator lens 12 in an optical-axis direction. Alternatively, the present optical pick-up may be arranged so as to include a beam expander (not shown), positioned between the collimator lens 12 and the first objective lens 15, which is constituted by a group of two lenses. According to the arrangement in which the beam expander is provided, a beam expander driving mechanism (not shown) for adjusting the distance between each of the group of two lenses and the other is used to correct the spherical aberration caused due to the error in thickness of the cover layer.

The following describes the second optical system 2 of the present optical pick-up. As shown in Fig. 1, the second optical system 2 includes a light source (second light source) 21, a collimator lens 22, a second diffraction grating (second diffraction element) 23, a polarizing beam splitter 24, the second objective lens (second converging element) 25, a converging lens 26, a cylindrical lens 27, and a photodetector (second photodetector) 28.

A beam emitted from the light source 21 is converted into parallel light by the collimator lens 22. Then, this beam is split by the first diffraction grating 23 into three beams: a zeroth-order light beam (MB) for use in performing recording or reproduction with respect to the first optical disk and positive and negative first-order light beams (SB1 and SB2) both for use in generation of a tracking error signal. The three beams thus split from one another by the first diffraction grating 23 pass through the polarizing beam splitter 24, and then enter the common optical system 10. Then, the three beams thus split from one another by the first diffraction grating 23 are reflected by the dichroic prism 100 of the common optical system 10 so as to have the same optical axis as does the beam emitted from the first optical system, and then are converted from linearly-polarized light into circularly-polarized light by the quarter wavelength plate 101. Thereafter, the three beams are converged on the second optical disk via the second objective lens 25.

The beams converged on the second optical disk are reflected, and then become return light that returns to the second optical system 2. The return light passes through the second objective lens 25, and then is converted from circularly-polarized light into linearly-polarized light by the quarter wavelength plate 101 of the common optical system 10. Then, the return light enters the second optical system 2 after having passed through the dichroic prism 100. In the second optical system 2, the return light is bent by the polarizing beam splitter 24 to a light path of an optical axis different from the axis of the emitted light (the optical axis of the beam emitted from the light source 21). Then, the return light is converged on the photodetector 28 after having passed through the converging lens 26 and the cylindrical lens 27. Note that: the converging lens 26 is used for converging the return light on the photodetector 28, and the cylindrical lens 27 is used for causing astigmatism in the return light. In the present optical pick-up, the return light reflected from the second optical disk is detected by the photodetector 28, so that a focus error signal, a tracking error signal, and a reproduction signal each generated at the time of performing recording or reproduction with respect to the second optical disk are obtained. Note that the photodetector 28 is provided with a second light-receiving element for receiving the return light reflected from the second optical disk, although the second light-receiving element is not shown.

In the present optical pick-up, the wavelength of the beam emitted from the light source 11 of the first optical system 1 is shorter than the wavelength of the beam emitted from the light source 21 of the second optical system 2. Moreover, whereas the dichroic prism 100 of the common optical system 10 transmits the relatively short-wavelength beam emitted from the light source 11, it reflects the relatively long-wavelength beam emitted from the light source 21.

Further, as described above, the first objective lens 15 is attached to the objective lens holder 102. Furthermore, the objective lens holder 102 is provided with the second objective lens 25 for converging the light emitted from the light source 21 (i.e., the light emitted from the second optical system 2).

The first objective lens 15 is disposed so that its center falls on the central line (central line L1 shown in Fig. 1) which runs through the rotation axis of the optical disk (first and second optical disks) and which extends in the x direction (direction of the axis along which the optical pick-up is moved in the radial direction of the optical disk). On the other hand, the second objective lens 25 is disposed so that its center is offset (displaced) from the central line (central line L1 shown in Fig. 1). That is, the second objective lens 25 is disposed so that its center is offset (displaced) from the center of the first objective lens 15 in the z-axis direction (tangential direction of the optical disk).

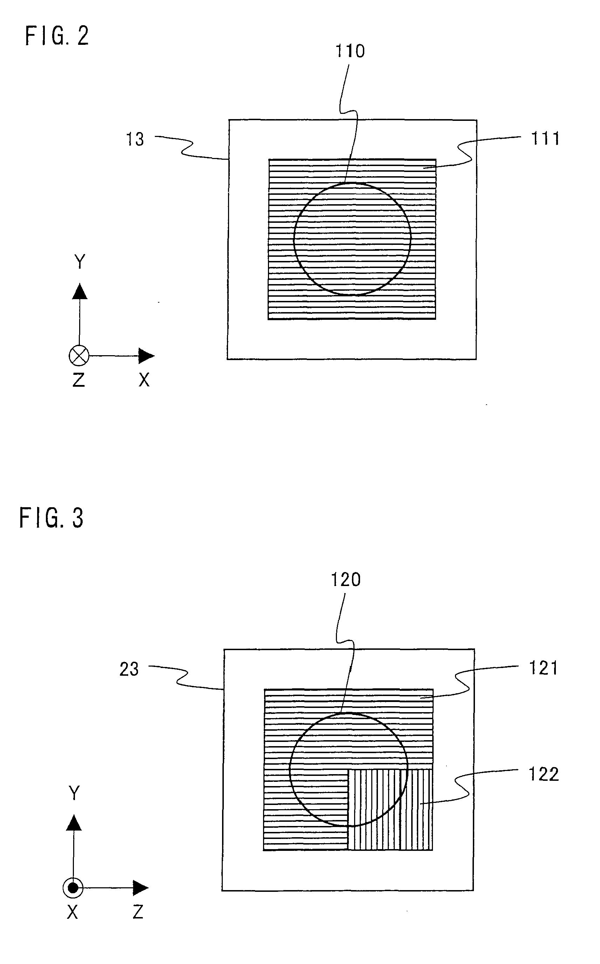

The present optical pick-up employs the phase shift DPP method in detecting a tracking error signal by using the second optical system 2 including the second objective lens 25, and the second diffraction grating 23 has a lattice plane designed so that the amplitude of a push-pull signal obtained from a spot of SB converged on the second optical disk is substantially 0. Such a lattice plane realizes stable tracking control of respective spots of MB, SB1, and SB2 each converged by the second objective lens. The following describes, with reference to Figs. 2 and 3, respective lattice planes of the first and second diffraction gratings 13 and 23 each serving as a diffraction grating for generating three beams in the present optical pick-up.

Fig. 2 is a plan view showing a lattice plane of the first diffraction grating 13 by which the beam emitted from the light source 11 of the first optical system 1 is split into the three beams. As shown in Fig. 2, the first diffraction grating 13 has a hologram pattern 111 provided with a lattice plane (lattice structure plane). The hologram pattern 111 has a sufficient area for an effective beam 110 to enter, the effective beam 110 being the parallel light into which the beam emitted from the light source 11 has been converted by the collimator lens 12. That is, the hologram pattern 111 is arranged so as to sufficiently include a circle whose diameter corresponds to the diameter of the effective beam 110.

Further, the hologram pattern 111 is provided with a plurality of lattice grooves extending in the x-axis direction and placed at regular intervals. That is, the lattice grooves extending in the x-axis direction in the hologram pattern 111 is placed at periodic intervals. This arrangement makes it possible that the beam emitted from the light source 11 and converted into the parallel light by the collimator lens 12 is split into the three beams, namely the zeroth-order light beam (MB), the positive first-order light beam (SB 1), and the negative first-order light beam (SB2).

The following describes the second diffraction grating 23 of the second optical system 2. As described above, the phase shift DPP method is employed in detecting a tracking error signal by using the second optical system 2 including the second objective lens 25. Fig. 3 is a plan view showing an example of the lattice plane of the second diffraction grating 23 by which the beam emitted from the light source 21 of the second optical system 2 is split into the three beams.

Fig. 3 shows a lattice plane had by the second diffraction grating 23 in cases where a phase shift DPP method disclosed, for example, by *Tokukai* 2001-250250 is employed as the phase shift DPP method. However, the lattice plane (phase shift region) of the second diffraction grating 23 is not limited to the structure shown in Fig. 3. This lattice plane only needs to be such a lattice plane that the amplitude of a push-pull signal obtained from a spot of SB converged on the second optical disk is substantially 0 by employing the phase shift DPP method.

As shown in Fig. 3, the second diffraction grating 23 has a hologram pattern including a first region 121 serving as a first lattice pattern and a second region 122 serving as a second lattice pattern. As shown in Fig. 3, in the first region 121 serving as the first lattice pattern, the second diffraction grating 23 has lattice grooves extending in the z-axis direction perpendicular to the radial direction (x-axis direction). On the other hand, in the second region 122 serving as the second lattice pattern, the second diffraction grating 23 has lattice grooves which are identical in pitch to, but are displaced by a half pitch from, those formed in the first region 121. That is, a land section and a groove section together serving as a patterned groove in the first region 121 are inverted with respect to a land section and a groove section together serving as a patterned groove in the second region 122. Such an arrangement causes the first region 121 and the second region 122 to be out of phase by 180 degrees with respect to each other. Therefore, in cases where the first region 121 is a region in which no phase difference is added, the second region 122 (phase shift region) is a region in which a phase difference of 180° has been added.

When a beam (effective beam 120) emitted from the light source 21 is split into a main beam (MB) and sub-beams (SB 1 and SB2) by the second diffraction grating 23, the main beam (MB) serving as a zeroth-order light beam passes through the second diffraction grating 23 without a change in phase. On the other hand, the sub-beams (SB1 and SB2) respectively serving as positive and negative first-order light beams are diffracted by the second diffraction grating 23, so that a phase difference of +180° and a phase difference of -180° are respectively added to the sub-beams (SB1 and SB2). That is, the sub-beams (SB1 and SB2) diffracted in the first region 12 1 serving as the first lattice pattern in the second diffraction grating 23 are out of phase by 180 degrees with respect to the sub-beams (SB1 and SB2) diffracted in the second region 122 serving as the second lattice pattern in the second diffraction grating 23, respectively. Therefore, if no phase difference has been added to light diffracted in the second region 122, a phase difference of 180° is added to light diffracted in the first region 121.

By thus designing the hologram pattern so that the positive and negative first-order light beams (SB 1 and SB2) diffracted in the first region 121 of the second diffraction grating 23 are respectively out of phase by 180 degrees with respect to the positive and negative first-order light beams (SB1 and SB2) diffracted in the first region 122 of the second diffraction grating 23, the amplitude of push-pull signals of SB1 and SB2 each detected by the photodetector 28 is substantially 0. Moreover, as with a common DPP method, this makes it possible to cancel an offset caused by an objective lens shift or a disk tilt.

Further, the lattice groove pitch of the second diffraction grating 23 is designed so that return light enters light-receiving elements formed at regular intervals on the photodetector 28.

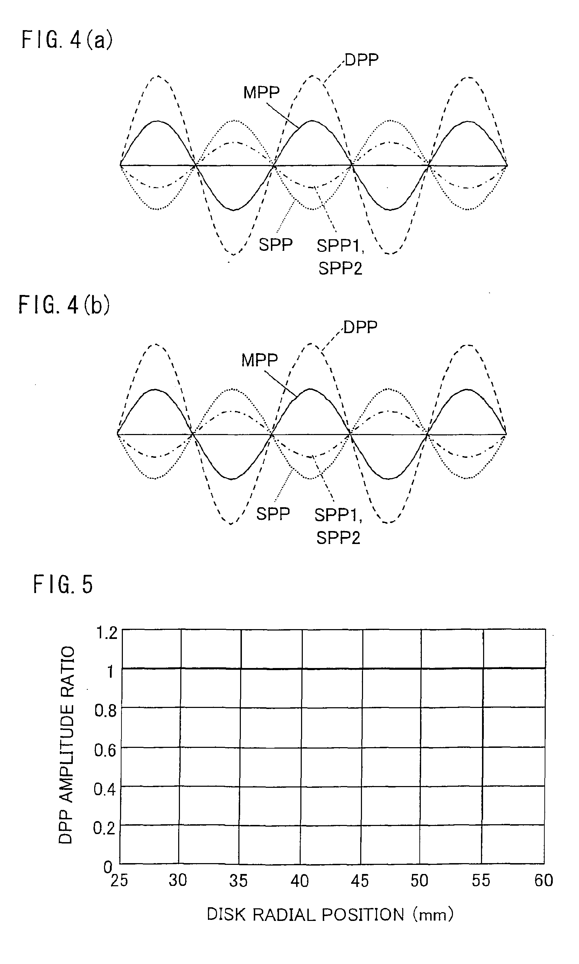

The following describes a tracking error signal obtained by the present optical pick-up. Figs. 4(a) and 4(b) are wave form charts showing push-pull signals obtained from respective spots nf MB, SB1, and SB2 each converged on the first optical disk. These push-pull signals are detected by the photodetector 18 of the first optical system 1. Fig. 4(a) shows signals outputted at a radial position of 40 mm (the term "radial position" being defined as a position falling on a line extending from the center of the first optical disk in the radial direction (x-axis direction)), and Fig. 4(b) shows signals outputted at a radial position of 25 mm on the first optical disk. Note that the rotation of the first diffraction grating 13 is adjusted at a radial position of 40 mm. Therefore, at a radial position of 40 mm on the first optical disk, the spot of SB1 and the spot of SB2 are respectively positioned on both sides of the track on which the spot of MB is positioned, so as to be displaced by a half track pitch with respect to the track, so that the push-pull signal obtained on the spot of MB is in phase opposition with respect to each of the push-pull signals respectively obtained on the spot of SB 1 and the spot of SB2.

Figs. 4(a) and 4(b) assume that MPP is an output push-pull signal obtained from the spot of MB serving as a zeroth-order light beam, that SPP1 is a push-pull signal obtained from the spot of SB1, that SPP2 is a push-pull signal obtained from the spot of SB2, that SPP is a sum signal of SPP1 and SPP2, and that DPP is a DPP signal serving as a tracking error signal.

As evidenced by Figs. 4(a) and 4(b), since the first objective lens 15 is disposed so that its center falls on the central line (central line L1 shown in Fig. 1) which runs through the rotation axis of the first optical disk and which extends in the x direction, no change in amplitude of the DPP signal is seen regardless of the radial position on the optical disk.

Further, Fig. 5 is a graph showing a change in amplitude of the DPP signal, which change is caused when the present optical pick-up is moved from the inner circumference to the outer circumference of the first optical disk in the radial direction (x-axis direction). As shown in Fig. 5, no change in amplitude of the DPP signal is seen between the inner circumference and the outer circumference of the first optical disk. This shows that stable tracking control is possible between the inner circumference and the outer circumference of the first optical disk.

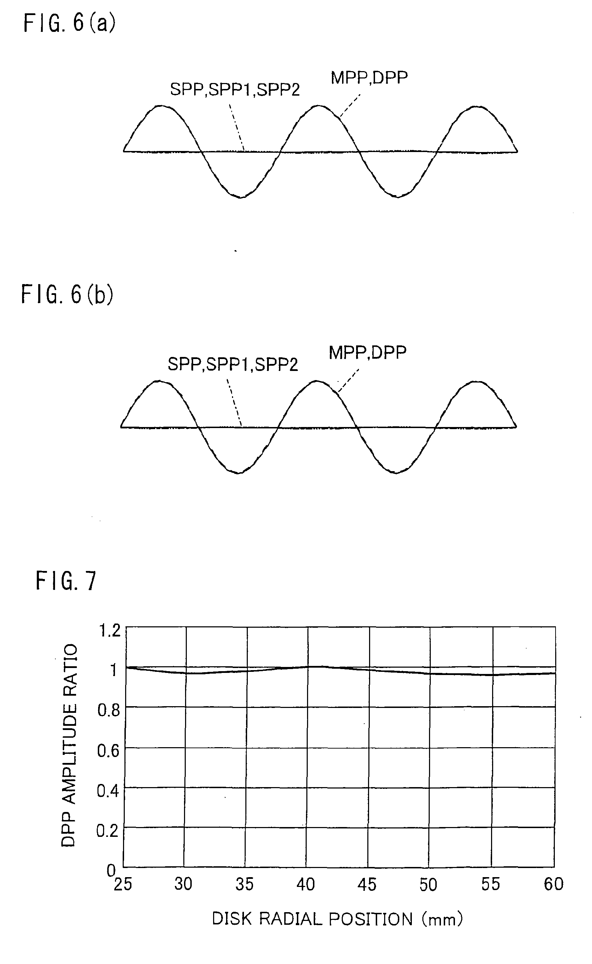

Figs. 6(a) and 6(b) are wave form charts showing push-pull signals obtained from respective spots of MB, SB 1, and SB2 each converged on the second optical disk. These push-pull signals are detected by the photodetector 28 of the second optical system 2. Fig. 6(a) shows signals outputted at a radial position of 40 mm on the second optical disk, and Fig. 4(b) shows signals outputted at a radial position of 25 mm on the second optical disk. Note that the rotation of the second diffraction grating 23 is adjusted at a radial position of 40 mm. Therefore, at a radial position of 40 mm on the second optical disk, the spot of SB1 and the spot of SB2 are respectively positioned on both sides of the track on which the spot of MB is positioned, so as to be displaced by a half track pitch with respect to the track.

Figs. 6(a) and 6(b) assume that MPP is an output push-pull signal obtained from the spot of MB serving as a zeroth-order light beam, that SPP1 is a push-pull signal obtained from the spot of SB1, that SPP2 is a push-pull signal obtained from the spot of SB2, that SPP is a sum signal of SPP1 and SPP2, and that DPP is a DPP signal serving as a tracking error signal.

The present optical pick-up employs a phase shift DPP method in detecting a tracking error signal by using the second optical system 2 including the second diffraction grating 23, thereby making it possible to cause the signal amplitude of SPP1 and SPP2 to be substantially 0.

The second objective lens 25 is disposed so that its center is offset (displaced) from the central line (central line L1 shown in Fig. 1) which runs through the rotation axis of the second optical disk and which extends in the x direction. As shown in Figs. 6(a) and 6(b), in spite of such a disposition of the second objective lens 25, no change in amplitude of the DPP signal is seen regardless of the radial position on the optical disk.

Further, Fig. 7 a graph showing a change in amplitude of the DPP signal, which change is caused when the present optical pick-up is moved from the inner circumference to the outer circumference of the second optical disk in the radial direction (x-axis direction). As shown Fig. 7, no change in amplitude of the DPP signal is seen between the inner circumference and the outer circumference of the second optical disk. This shows that stable tracking control is possible between the inner circumference and the outer circumference of the second optical disk.

As described above, in the second optical system having the objective lens placed in the offset position displaced from the central line extending from the central axis of the optical disk in the radial direction, the tracking error signal is detected according to the phase shift DPP method. Therefore, even when the optical pick-up is moved from the inner circumference to the outer circumference of the optical disk, no change is seen in signal amplitude of the DPP signal serving as the tracking error signal. This allows for stable tracking control.

Therefore, even when the present optical pick-up has two objective lenses and separately converges beams respectively emitted from two light sources having different wavelengths, neither of tracking error signals respectively obtained from optical systems is changed in terms of DPP signal width on the inner circumference and the outer circumference of an optical disk. This allows for stable tracking control.

Further, the present optical pick-up is arranged such that light reflected from an optical disk is received by a photodetector as follows: Light reflected from a spot of light converged by the first objective lens 15 (first converging element) is received by the photodetector 18 of the first optical system 1. However, the present optical pick-up may be arranged such that the light reflected from the spot of light converged by the first objective lens 15 is received by the photodetector 28 of the second optical system 2. Further, on the other hand, the present optical pick-up may be arranged such that light reflected from a spot of light converged by the second objective lens 25 (second converging element) is received by the photodetector 18 of the first optical system 1.

Such an arrangement of the present optical pick-up can be realized by optimizing the reflection characteristics and transmission characteristics of the dichroic prism 100. This makes it possible to achieve a reduction in the number of components such as converging lenses, cylindrical lenses, and light-receiving elements, thereby achieving a reduction in cost and size of the optical pick-up.

[Embodiment 2]

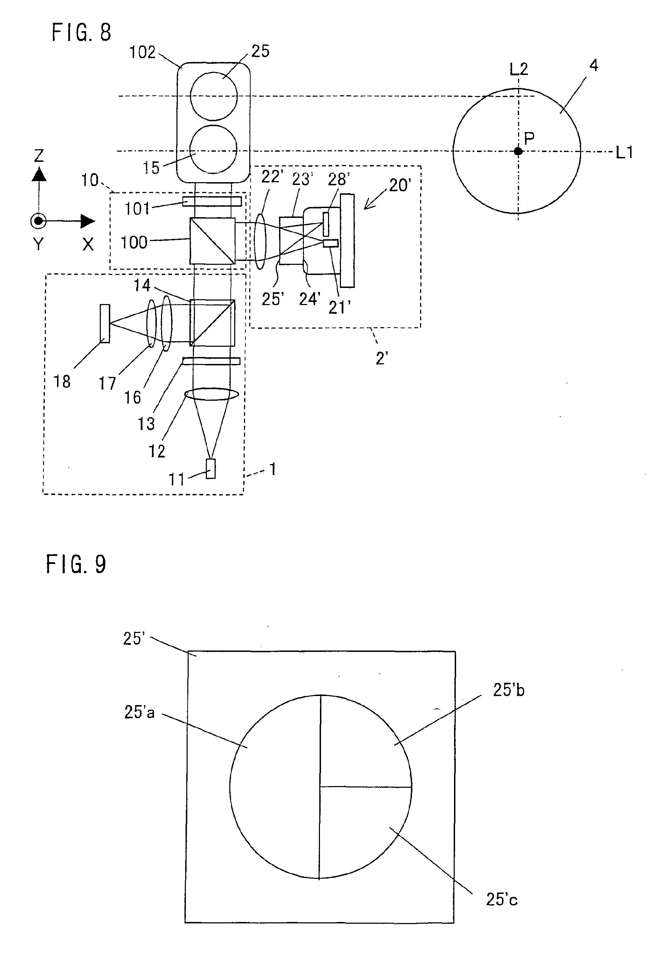

Another embodiment of the present invention will be described below with reference to Figs. 8 through 10. Fig. 8 is a schematic diagram showing a light path of an optical pick-up according to the present embodiment (such an optical pick-up being hereinafter referred to as "present optical pick-up"). For convenience of explanation, members having the same functions as those shown in the drawings of Embodiment 1 are given the same reference numerals, and will not be described below. Furthermore, the positional relationship between a second objective lens and a first objective lens in the present embodiment is the same as in Fig. 1 of Embodiment 1, and therefore will not be described below.

As shown in Fig. 8, the present optical pick-up realizes stable tracking control by including a second optical system 2' instead of the second optical system 2 of the optical pick-up of Embodiment 1. That is, the present optical pick-up differs from Embodiment 1 in that the present optical pick-up employs a hologram laser unit 20' integrally constituted by a light source (second light source) 21', a hologram element 23', and a photodetector (second photodetector) 28'.

As shown in Fig. 8, a hologram pattern 24' is formed on that surface of the hologram element 23' which faces the light source 21', and a hologram pattern 25' is formed on that surface of the hologram element 23' which faces away from the light source 21'. In the second optical system 2', a beam emitted from the light source 21' is split by the hologram pattern (second diffraction element) 24' into three beams: a zeroth-order light beam (MB) for use in performing recording or reproduction with respect to the second optical disk and positive and negative first-order light beams (SB1 and SB2) for use in generation of a tracking error signal. The three beams thus split from one another by the hologram pattern 24' pass through a collimator lens 22', and then enter the common optical system 10.

The three beams thus split from one another by the hologram pattern 24' are reflected by the dichroic prism 100 of the common optical system 10 so as to have the same optical axis as does the beam emitted from the first optical system, and then are converted from linearly-polarized light into circularly-polarized light by the quarter wavelength plate 101. Thereafter, the three beams are converged on the second optical disk via the second objective lens 25.

The beams converged on the second optical disk are reflected, and then become return light that returns to the second optical system 2'. The return light passes through the second objective lens 25, and then is converted from circularly-polarized light into linearly-polarized light by the quarter wavelength plate 101 of the common optical system 10. Then, the return light enters the second optical system 2' after having been reflected by the dichroic prism 100. In the second optical system 2', the return light having passed through the collimator lens 22' is diffracted by the hologram pattern 25' formed on the hologram element 23' of the hologram laser unit 20', and then is guided to the photodetector 28'. The photodetector 28' detects a focus error signal, a radial error signal, and a reproduction signal.

Although not shown in Fig. 8, as in Embodiment 1, the hologram pattern 24' formed on the hologram element 23' is designed so that the amplitude of a push-pull signal obtained from a spot of SB converged on the second optical disk is substantially 0. Examples of how the hologram pattern 24' is specifically arranged include the structure shown in Fig. 3 described above in Embodiment 1.

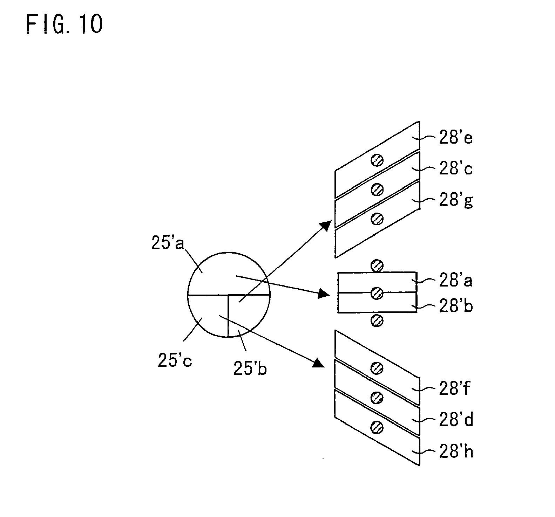

The following describes, with reference to Figs. 9 and 10, how the present optical pick-up operates in generating a focus error signal, a radial error signal, and a reproduction signal. Fig. 9 is a plan view showing the hologram pattern 25' formed on the hologram element 23'. As shown in Fig. 9, the hologram pattern 25' is divided into three regions 25'a, 25'b, and 25'c.

Fig. 10 is an explanatory diagram showing the respective shapes of light-receiving sections of the photodetector 28' and the way in which the photodetector 28' receives light. In Fig. 10, the three regions 25'a, 25'b, and 25'c of the hologram pattern 25' correspond to light-receiving sections that receive light diffracted by these regions, respectively.

As shown in Fig. 10, beams (three beams) diffracted by the region 25'a are received by light-receiving sections (second light-receiving elements) 28'a and 28'b. Further, beams (three beams) diffracted by the region 25'b are received by light-receiving sections (second light-receiving elements) 28'c, 28'e, and 28'g. Further, beams (three beams) diffracted by the region 25'c are received by light-receiving sections (second light-receiving elements) 28'd, 28'f, and 28'h. Note that the light-receiving sections 28'a to 28'h output signals Sa to Sh, respectively.

An RF signal (RF) generated at the time of performing recording or reproduction with respect to the second optical disk can be detected according to the following formula:

$$RF = Sa + Sb + Sc + Sd$$

Further, a tracking error signal (TES2) generated at the time of performing recording or reproduction with respect to the second optical disk can be detected with use of the phase shift DPP method according to the following formula:

$$TES2 = (Sc - Sd) - \alpha\{(Se - Sf) + (Sg - Sh)\}$$

A focus error signal (FES) generated at the time of performing recording or reproduction with respect to the second optical disk can be detected with use of a knife-edge method according to the following formula:

$$FES = Sa - Sb$$

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 is obtained in the optical system in which a beam is emitted from the light source 21' and converged by the objective lens 25, so that stable tracking control becomes possible between the inner circumference and the outer circumference.

Furthermore, in the present optical pick-up, the second optical system is a hologram laser unit in which optical components are integrated. This makes it possible to reduce the size of the optical pick-up.

[Embodiment 3]

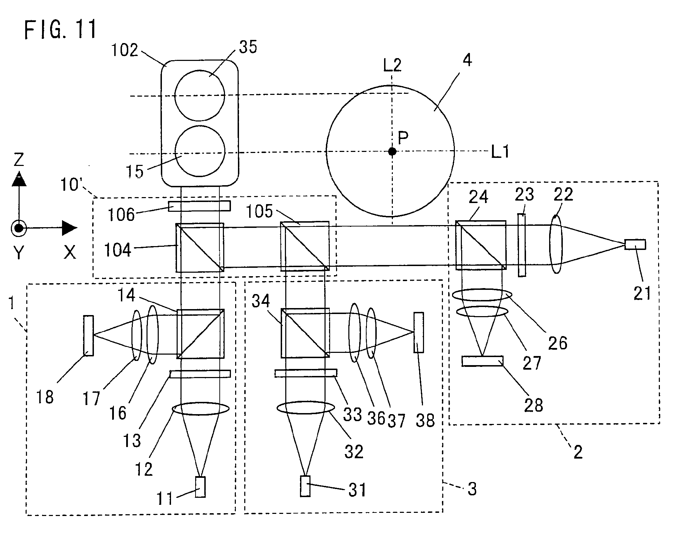

Another embodiment of the present invention will be described below with reference to Fig. 11. Fig. 11 is a diagram schematically showing a structure of an optical pick-up of the present embodiment (such an optical pick-up being hereinafter referred to as "present optical pick-up"). For convenience of explanation, members having the same functions as those shown in the drawings of Embodiment 1 are given the same reference numerals, and will not be described below.

The present optical pick-up differs from Embodiment 1 in that the present optical pick-up further includes a third optical system 3 provided in a light path extending from the second optical system 2 to a common optical system 10'. The third optical system 3 converges a beam on a third optical disk by using a second objective lens 35. In the present optical pick-up, the second optical system 2 similarly converges a beam on the second optical disks by using the second objective lens 35. That is, in the present optical pick-up, the second objective lens 35 is provided as common converging means for both the second optical system 2 and the third optical system 3.

As shown Fig. 11, the first objective lens 15 and the second objective lens 35 are attached to the objective lens holder 102. The first objective lens 15 is used for converging light on the first optical disk, and the second objective lens 35 is used for converging light on the second optical disk and the third optical disk. Note that the first to third optical disks have different cover layers. Note that the first objective lens 15 and the second objective lens 35 are positioned with respect to each other as shown in Fig. 11. That is, whereas the first objective lens 15 is disposed so that its center falls on the central line L1 as seen from the y-axis direction, the second objective lens 35 is disposed so that its center is offset (displaced) from the central line L1.

The third optical system 3 includes a light source 31, a collimator lens 32, a third diffraction grating 33, a polarizing beam splitter 34, the second objective lens 35, a converging lens 36, a cylindrical lens 37, and a photodetector 38.

As shown in Fig. 11, in the third optical system 3, a beam emitted from the light source 31 is converted into parallel light by the collimator lens 32. Then, this beam is split by the third diffraction grating 33 into three beams: a zeroth-order light beam (MB) for use in performing recording or reproduction with respect to the third optical disk and positive and negative first-order light beams (SB1 and SB2) both for use in generation of a tracking error signal. The three beams thus split from one another by the third diffraction grating 33 pass through the polarizing beam splitter 34, and then enter the common optical system 10'.

In the present optical pick-up, the common optical system 10' is arranged so as to include a dichroic prism 104, a dichroic prism 105, and a quarter wavelength plate 106. The three beams, having entered the common optical system 10', first enter the dichroic prism 105. Note that the dichroic prism 105 functions so that the beam emitted from the third optical system is guided in the same optical-axis direction as the beam emitted from the second optical system travels. Further, the dichroic prism 105 directly transmits the beam emitted from the second optical system 2, and then guides the beam to the dichroic prism 104.

The three beams, reflected by the dichroic prism 105 of the common optical system 10' in the same optical-axis direction as the beam emitted from the second optical system 2 travels, are reflected again by the dichroic prism 104 so as to have the same optical axis as does the beam emitted from the first optical system, and then are converted from linearly-polarized light into circularly-polarized light by the quarter wavelength plate 106. Then, the three beams are converged on the third optical disk via the second objective lens 35. Note that the second objective lens 35 is designed to be able to converge light on the second and third optical disks whose respective cover layers have different thicknesses.

The beams converged on the third optical disk are reflected, and then become return light that returns to the third optical system 3. The return light passes through the second objective lens 35, and then is converted from circularly-polarized light into linearly-polarized light by the quarter wavelength plate 106 of the common optical system 10'. Then, the return light enters the third optical system 3 after having been reflected by the dichroic prisms 104 and 105. In the third optical system 3, the return light is bent by the polarizing beam splitter 34 to a light path of an optical axis different from the axis of the emitted light (the optical axis of the beam emitted from the light source 31). Then, the return light is converged on the photodetector 38 after having passed through the converging lens 36 and the cylindrical lens 37. Note that: the converging lens 36 is used for converging the return light on the photodetector 38, and the cylindrical lens 37 is used for causing astigmatism in the return light. In the present optical pick-up, the return light reflected from the third optical disk is detected by the photodetector 38, so that a focus error signal, a tracking error signal, and a reproduction signal each generated at the time of performing recording or reproduction with respect to the third optical disk are obtained.

Here, the wavelength of the beam emitted from the light source 31 of the third optical system 3 is different from the respective wavelengths of the beam emitted from the first optical system 1 and the beam emitted from the second optical system 2. Further, the third diffraction grating 33 of the third optical system 3 only needs to have such a lattice plane that the amplitude of a push-pull signal obtained from a spot of SB converged on the third optical disk is substantially 0. Examples of a hologram pattern to be formed on the lattice plane of the third diffraction grating 33 include a hologram pattern similar to that formed on the lattice plane of the second diffraction grating 23 shown in Fig. 3. Further, as in Embodiment 1, the lattice groove pitch of the third diffraction grating 33 is designed so that the return light enters light-receiving elements formed at regular intervals on the photodetector 38.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 is obtained in the optical system in which a beam is emitted from the light source 21 or 31 and converged by the objective lens 35, so that stable tracking control becomes possible between the inner circumference and the outer circumference.

[Embodiment 4]

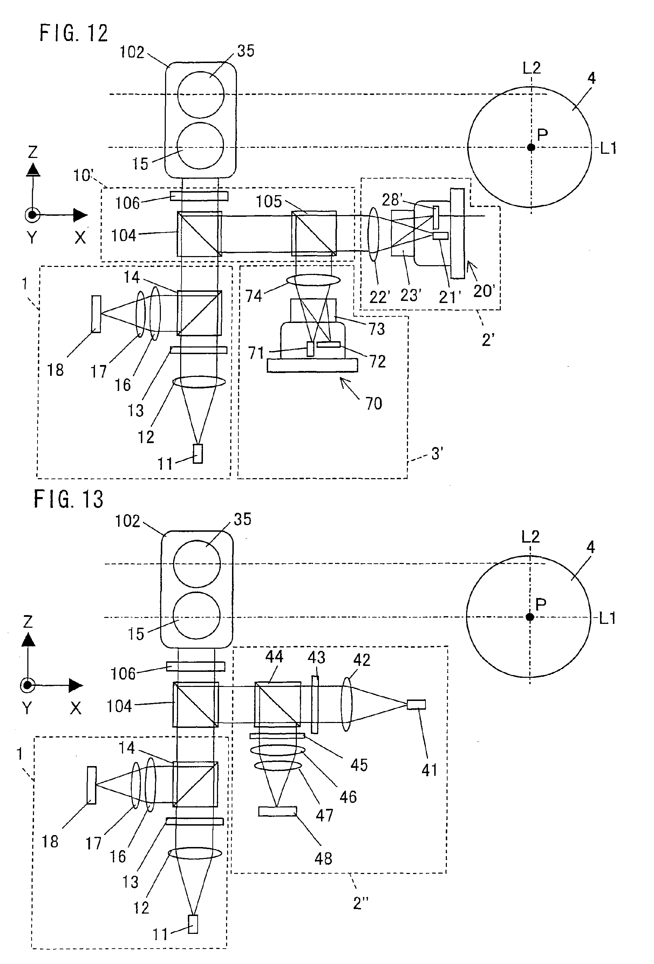

Another embodiment of the present invention will be described below with reference to Fig. 12. Fig. 12 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 3 are given the same reference numerals, and will not be described below. Furthermore, the positional relationship between a second objective lens and a first objective lens in the present embodiment is the same as in Fig. 11 of Embodiment 3, and therefore will not be described below.

The present optical pick-up differs from Embodiment 3 in that the present optical pick-up includes second and third optical systems each of which includes a hologram laser unit integrally constituted by a light source, a diffraction grating, and a photodetector.

As shown in Fig. 12, the present optical pick-up includes a first optical system 1 including a first objective lens 15, second and third optical systems 2' and 3' including a second objective lens 35, and a common optical system 10'. The second and thirst optical systems 2' and 3' share the second objective lens 35 to converge light on second and third optical disks, respectively.

The optical system 1, second optical system 2', and common optical system 10' of the present optical pick-up are identical to those described in Figs. 1, 8, and 11, respectively, and therefore will not be described below. The following describes the third optical system 3', which is a feature of the present optical pick-up.

As shown in Fig. 12, the third optical system 3' includes a hologram laser unit 70 and a collimator lens 74. The hologram laser unit 70 is integrally constituted by a light source 71, a photodetector 72, and a hologram element 73.

As shown in Fig. 12, a hologram pattern 73a is formed on that surface of the hologram element 73 which faces the light source 71, and a hologram pattern 73b is formed on that surface of the hologram element 73 which faces away from the light source 71. In the third optical system 3', a beam emitted from the light source 71 is split by the hologram pattern 73a into three beams: a zeroth-order light beam (MB) for use in performing recording or reproduction with respect to the third optical disk and positive and negative first-order light beams (SB1 and SB2) for use in generation of a tracking error signal. The three beams thus split from one another by the hologram pattern 73a pass through the collimator lens 74, and then enter the common optical system 10'. A light path along which the three beams having entered the common optical system 10' travel until they are converged on the third optical disk and a light path along which return light into which the three beams converged on the third optical disk have been converted travels until it enters the third optical system 3' are identical to those described in Fig. 11, and therefore will not be described below.

The return light having entered the third optical system 3' passes through the collimator lens 74. Thereafter, the return light is diffracted by the hologram patter 73a formed on the hologram element 73 of the hologram laser unit 70, and then is guided to the photodetector 72. The photodetector 72 detects a focus error signal, a radial error signal, and a reproduction signal.

Although not shown in Fig. 12, as in Embodiment 1, the hologram pattern 73a formed on the hologram element 73 is designed so that the amplitude of a push-pull signal obtained from a spot of SB converged on the third optical disk is substantially 0. Examples of how the hologram pattern 73a is specifically arranged include the structure shown in Fig. 3 described above in Embodiment 1. Further, the hologram pattern 73b formed on the hologram element 73 is identical to that shown in Fig. 9, and therefore will be described below. The way in which the present optical pick-up operates in generating a focus error signal, a radial error signal, and a reproduction signal is identical to that described in Fig. 10, therefore will not be described below.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 is obtained in the optical system in which a beam is emitted from the light source 21' or 71 and converged by the objective lens 35, so that stable tracking control becomes possible between the inner circumference and the outer circumference.

Furthermore, in the present optical pick-up, each of the second and third optical systems is a hologram laser unit in which optical components are integrated. This makes it possible to reduce the size of the optical pick-up.

[Embodiment 5]

Another embodiment of the present invention will be described below with reference to Fig. 13. Fig. 13 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 4 are given the same reference numerals, and will not be described below. Furthermore, the positional relationship between a second objective lens and a first objective lens in the present embodiment is the same as in Fig. 11 of Embodiment 3, and therefore will not be described below.

The present optical pick-up includes, instead of the second optical system 2 shown in Fig. 1, a second optical system including a light source capable of emitting beams of different wavelengths from a single package, thereby realizing stable tracking control.

As shown in Fig. 13, the second optical system 2" includes a light source 41, a collimator lens 42, a second diffraction grating 43, a polarizing beam splitter 44, a second objective lens 35, a correction diffraction grating 45, a converging lens 46, a cylindrical lens 47, and a photodetector 48.

A beam emitted from the light source 41 is converted into parallel light by the collimator lens 42. Then, this beam is split by the second diffraction grating 43 into three beams: a zeroth-order light beam (MB) for use in performing recording or reproduction with respect to the third optical disk and positive and negative first-order light beams (SB 1 and SB2) for use in generation of a tracking error signal. The three beams thus split from one another by the second diffraction grating 43 pass through the polarizing beam splitter 44, and then enter the dichroic prism 104.

Then, the three beams are reflected by the dichroic prism 104 so as to have the same optical axis as does the beam emitted from first optical system 1, and then are converted from linearly-polarized light into circularly-polarized light by the quarter wavelength plate 106. Thereafter, the three beams are converged on the second and third optical disks via the second objective lens 35. Note that the second objective lens 35 is designed so that two beams emitted from the light source 41 and having different wavelengths can be respectively converged on the second and third optical disks whose respective cover layers have different thicknesses.

The beams converged on the second and third optical disks are reflected, and then become return light that returns to the second optical system 2". The return light passes through the second objective lens 35, and then is converted from circularly-polarized light into linearly-polarized light by the quarter wavelength plate 106. Then, the return light enters the second optical system 2" after having been reflected by the dichroic prism 104. In the second optical system 2", the return light is bent by the polarizing beam splitter 44 to a light path of an optical axis different from the axis of the emitted light (the optical axis of the beam emitted from the light source 41). Then, the return light is converged on the photodetector 48 after having passed through the converging lens 46 and the cylindrical lens 47. Note that: the converging lens 46 is used for converging the return light on the photodetector 48, and the cylindrical lens 47 is used for causing astigmatism in the return light. In the present optical pick-up, the return light reflected from the second and third optical disks is detected by the photodetector 48, so that a focus error signal, a tracking error signal, and a reproduction signal generated at the time of performing recording or reproduction with respect to the second and third optical disks are obtained.

Further, in the present optical pick-up, the light source 41 of the second optical system 2" is designed to emit two beams having different wavelengths. Therefore, the light source 41 has different points from which the two beams having different wavelengths are respectively emitted (the two beams are not emitted from the same position, but are emitted from different positions). Accordingly, the photodetector 48 that detects return light has different positions on which the two beams are respectively converged. This causes the respective optical axes of the two beams to be out of alignment due to the difference in wavelength. In order to correct such a misalignment of optical axes, the correction diffraction grating 45 is disposed between the polarizing beam splitter 44 and the converging lens 46. The correction diffraction grating 45 causes the two beams having different wavelengths to be converged on substantially the same position on the photodetector 48.

Further, the second diffraction grating 43 of the second optical system 2" only needs to have such a lattice plane that the amplitude of a push-pull signal obtained from a spot of SB converged on the second and third optical disks is substantially 0. Examples of a hologram pattern to be formed on the lattice plane of the second diffraction grating 43 include a hologram pattern similar to that formed on the lattice plane of the second diffraction grating 23 shown in Fig. 3. Further, as in Embodiment 1, the lattice groove pitch of the second diffraction grating 43 is designed so that the return light enters light-receiving elements formed at regular intervals on the photodetector 48.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 is obtained in the optical system in which a beam is emitted from the light source 41 and converged by the objective lens 35, so that stable tracking control becomes possible between the inner circumference and the outer circumference.

[Embodiment 6]

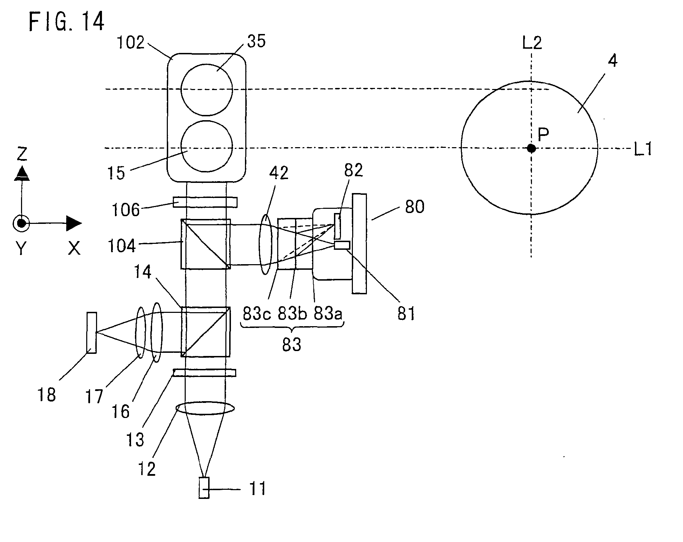

Another embodiment of the present invention will be described below with reference to Fig. 14. Fig. 14 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 5 are given the same reference numerals, and will not be described below. Furthermore, the positional relationship between a first objective lens and a second objective lens in the present embodiment is the same as in Fig. 1 of Embodiment 1, and therefore will not be described below.

The present embodiment differs from Embodiment 5 in that the present embodiment uses a hologram laser unit 80 integrally constituted by a light source 81, a hologram element 83, and a photodetector 82. Note that the light source 81 is a dual-wavelength laser capable of emitting two light beams having different wavelengths.

A light beam emitted from the light source 81 is split by a diffraction grating 83a, formed on one surface of the hologram element 83, into a zeroth-order light beam for use in recording and reproduction and positive and negative first-order light beams for use in generation of a tracking error signal, and is guided by the dichroic prism 104 so as to have the same optical axis as does light emitted from the other light source. Thereafter, the light is converged on an optical disk via the quarter wavelength plate 106 and the objective lens 35. Then, the light reflected from the optical disk is reflected again by the objective lens 35 and the dichroic prism 104, diffracted by hologram surfaces 83b and 83c formed on the hologram element 83 of the hologram laser unit 80, and then guided to the photodetector 82, so that a servo signal and an RF signal are detected. Note that the hologram surfaces 83b and 83c are arranged so as to diffract either a light beam having a second wavelength or a light beam having a third wavelength.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 described above is obtained in the optical system in which a beam is emitted from the light source 81 and converged by the objective lens 35, so that stable tracking control becomes possible between the inner circumference and the outer circumference.

[Embodiment 7]

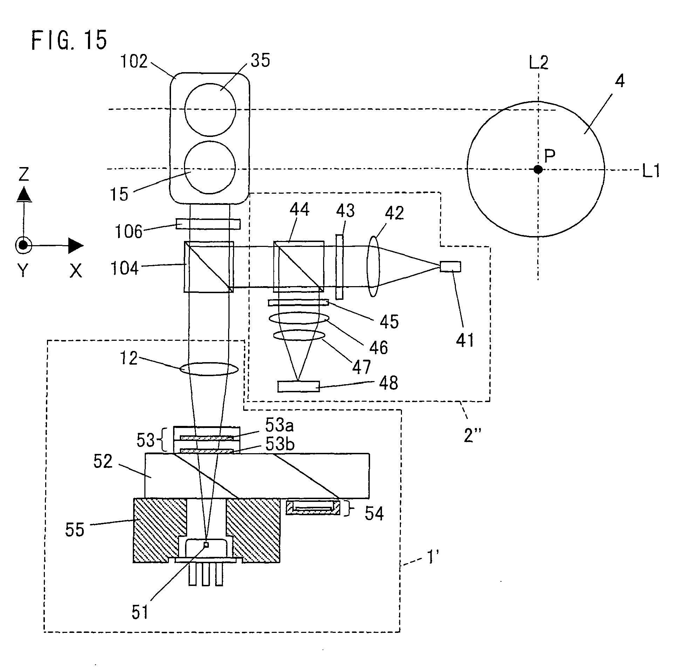

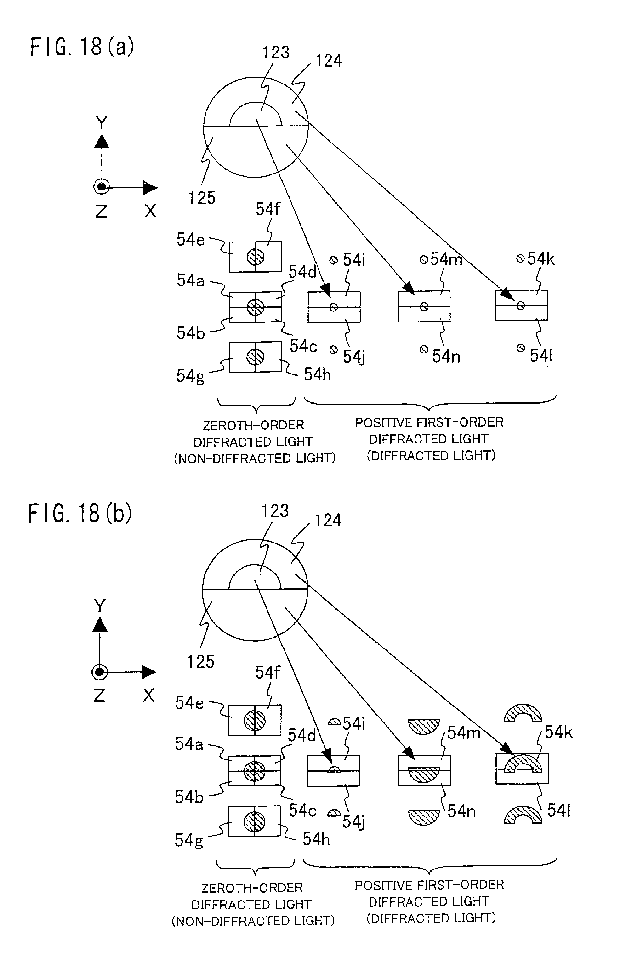

Another embodiment of the present invention will be described below with reference to Figs. 15 through 18(a) and 18(b). Fig. 15 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 6 are given the same reference numerals, and will not be described below. Furthermore, the positional relationship between a first objective lens and a second objective lens in the present embodiment is the same as in Fig. 11 of Embodiment 3, and therefore will not be described below.

The present optical pick-up differs from Embodiment 1 in that the present optical pick-up includes, instead of the first optical system 1 shown in Fig. 1, a first optical system including an integrated optical unit in which optical components are integrated. Furthermore, the present optical pick-up employs a second optical system (the second optical system 2" shown in Fig. 13) arranged so as to include a light source capable of emitting beams of different wavelengths from a single package. However, the second optical system of the present optical pick-up is not limited to this arrangement.

The second optical system of the present optical pick-up has the same functions as those of the second optical system 2" shown in Fig. 13, and therefore will not be described below. The following describes the first optical system, which is a feature component of the present optical pick-up.

As shown in Fig. 15, the first optical system 1' includes an integrated optical unit 200 and a collimator lens 12.

A beam emitted from the integrated optical unit 200 (i.e., three beams (MB, SB1, and SB2) split from one another by a second polarization hologram element 53a described later) is converted into parallel light by the collimator lens 12. Thereafter, the beam passes through the dichroic prism 104, and then converted from linearly-polarized light into circularly-polarized light by the quarter wavelength plate 106. Then, the beam is converged on the first optical disk via the objective lens 15.

The beam converged on the first optical disk is reflected, and then becomes return light that returns to the first optical system 1'. The return light passes through the first objective lens 15, and then is converted from circularly-polarized light into linearly-polarized light by the quarter wavelength plate 106. Then, the return light enters the first optical system 1' after having passed through the dichroic prism 104. In the first optical system 1', the return light is converged on a photodetector 54 provided in the integrated optical unit 200. In the present optical pick-up, the return light reflected from the first optical disk is detected by the photodetector 54, so that a focus error signal, a tracking error signal, a spherical aberration signal, and a reproduction signal each generated at the time of performing recording or reproduction with respect to the first optical disk are obtained.

The following fully describes a structure of the integrated optical unit 200 provided in the first optical system 1'. The integrated optical unit 200 is constituted by a light source 51, the photodetector 54, a polarizing beam splitter 52, a polarization diffraction element 53, and a holding member 55. The holding member 55 holds the light source 51 therein. Furthermore, the holding member 55 is provided with a beam outlet 55a via which a beam emitted from the light source 51 is guided to the first optical disk. Further, the holding member 55 is arranged so that the light source 51 can be inserted into the holding member 55, and is shaped so that the polarizing beam splitter 52 can be fixed to the holding member 55.

For convenience of explanation, the following description assumes that that surface of the polarizing beam slitter 52 which the beam emitted from the light source 51 enters is a beam entrance surface of the polarizing beam splitter 52 and that that surface of the polarizing beam splitter 52 which the return light enters is a return-light entrance surface of the polarizing beam splitter 52.

As shown in Fig. 15, the polarizing beam splitter 52 is disposed on the holding member 55. Moreover, the polarizing beam splitter 52 is disposed on the holding member 55 so that the beam entrance surface covers the beam outlet 55a. Further, the polarization diffraction element 53 is provided on the return-light entrance surface of the polarizing beam splitter 52 so as to be positioned on the optical axis of the beam emitted from the light source 51. Further, the photodetector 54 is provided on the beam entrance surface of the polarizing beam splitter 52. In the integrated optical unit 200, a beam-emitting section of the light source 51 and a light-receiving section of the photodetector 54 are disposed so that a light path of the beam emitted from the light source 51 and a light path of the return light to be received by the photodetector 54 are secured.

The following describes a path through which a beam passes in the integrated optical unit 200.

The light source 51 emits a P-polarized light beam, which is a type of linearly-polarized light beam. The P-polarized light beam emitted from the light source 51 passes through the polarizing beam splitter 52, and then enters the polarization diffraction element 53.

On those surfaces of the polarization diffraction element 53 which face each other, a second polarization diffraction element 53a having a second hologram region and a first polarization diffraction element 53b having a first hologram region are formed, respectively.

The second polarization diffraction element 53a and the first polarization diffraction element 53b are disposed on the optical axis of the beam, and the first polarization diffraction element 53b is arranged so as to be disposed closer to the light source 51 than is the second polarization diffraction element 53a.

The second polarization diffraction 53a includes the second hologram region that diffracts P-polarized light and transmits S-polarized light. Further, the first polarization diffraction element 53b includes the first hologram region that diffracts S-polarized light and transmits P-polarized light. The diffraction of polarized light is achieved by a groove structure (grating) formed on each of the respective hologram regions of the polarization diffraction elements, and the angle of diffraction is defined by the pitch (hereinafter referred to as "lattice pitch") of the groove structure (grating). Note that hologram patterns of the hologram regions of the second polarization diffraction element 53a and the first polarization diffraction element 53b will be described later in detail.

For this reason, the P-polarized light beam, having passed through the polarizing beam splitter 52, directly passes through the first polarization diffraction element 53b, and then enters the second polarization diffraction element 53a. Further, the second polarization diffraction element 53a is provided with a three-beam-generating hologram pattern for detecting a tracking error signal (TES). As a TES detecting method using three beams, a three-beam method, a differential push-pull (DPP) method, a phase shift DPP method, or the like are employed.

The second polarization diffraction element 53a diffracts P-polarized light and directly transmits S-polarized light. Specifically, the second polarization diffraction element 53a splits incoming P-polarized light into a zeroth-order diffracted light beam (MB) and positive and negative first-order diffracted light beams (SB1 and SB2). That is, the P-polarized light beam emitted from the first polarization diffraction element 53b enters the second polarization diffraction element 53a, is split into a zeroth-order diffracted light beam (MB) and positive and negative first-order diffracted light beams (SB1 and SB2), and is emitted from the second polarization diffraction element 53a.

The beam (three beams) thus emitted from the integrated optical unit 200 is converted from linearly-polarized light (P-polarized light) into circularly-polarized light by the quarter wavelength plate 106 as described above, and then is converged on the first optical disk. Then, the return light reflected from the first optical disk is converted from circularly-polarized light into linearly-polarized light (S-polarized light) by the quarter wavelength plate 106, and then enters the integrated optical unit. That is, the present optical pick-up is arranged such that: whereas the beam (three beams) emitted from the integrated optical unit 200 is P-polarized light, the return light (three beams) about to enter the integrated optical unit 200 is S-polarized light.

Therefore, the S-polarized return light passes through the second polarization hologram element 53a, and then enters the first polarization hologram element 53b. Then, on entering the first polarization diffraction element 53b, the S-polarized return light is diffracted so as to be split into a zeroth-order diffracted light beam (non-diffracted light beam) and positive and negative first-order diffracted light beams (diffracted light beams), and then enters the polarizing beam splitter 52. The return light thus split into the zeroth-order diffracted light beam (non-diffracted light beam) and the first-order diffracted light beams (diffracted light beams) is reflected by the polarizing beam splitter 52, and then enters the photodetector 54.

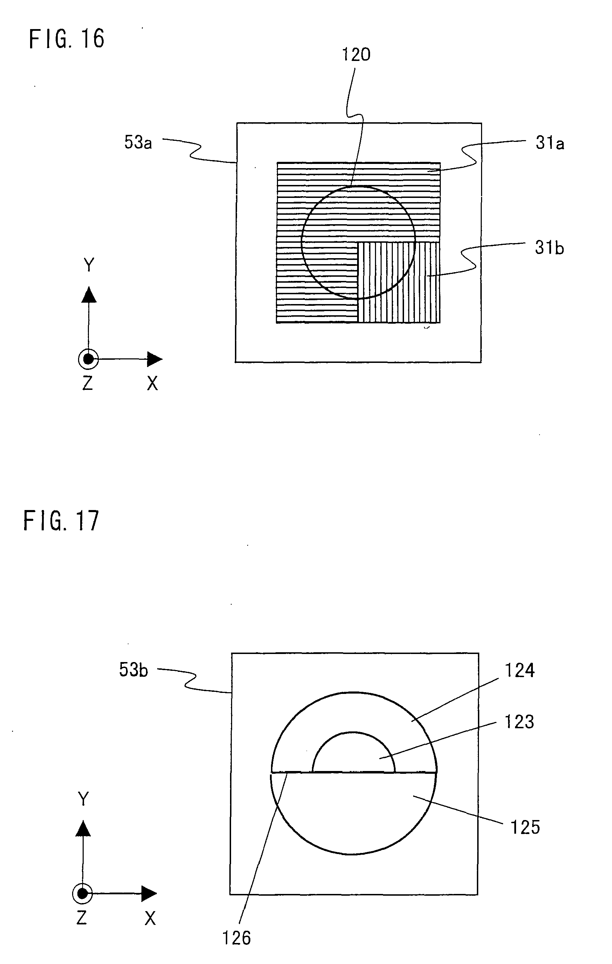

The following describes, with reference to Fig. 16, a hologram pattern formed on the second polarization hologram element 53a. The lattice pitch is designed so that the three beams are sufficiently separated from one another on the photodetector 54.

The hologram pattern of the second polarization hologram element 53a is constituted by two regions: a first region 31 a serving as a first pattern and a second region 31b serving as a second pattern. As shown in Fig. 16, in the first region 31 a serving as the first lattice pattern, the second polarizing hologram element 53a has lattice grooves extending in the radial direction (x-axis direction). On the other hand, in the second region 31b serving as the second lattice pattern, the second polarization hologram element 53b has lattice grooves which are identical in pitch to, but are displaced by a half pitch from, those formed in the first region 31b. That is, a land section and a groove section together serving as a patterned groove in the first region 31a are inverted with respect to a land section and a groove section together serving as a patterned groove in the second region 31b. Such an arrangement causes the first region 31 a and the second region 31b to be out of phase by 180 degrees with respect to each other. Therefore, in cases where the first region 31a is a region in which no phase difference is added, the second region 31b is a region (phase shift region) in which a phase difference of 180° has been added.

Since the hologram pattern has such a periodic structure, the amplitude of push-pull signals respectively obtained from SB1 and SB2 each detected by the photodetector 54 becomes substantially 0. Moreover, it becomes possible to cancel an offset caused by an objective lens shift or a disk tilt. The amplitude of the push-pull signals respectively obtained from the sub-beams becomes substantially 0, so that it becomes possible to cancel an offset caused by an objective lens shift or a disk tilt.

The following describes, with reference to Fig. 1.7, a hologram pattern formed on the first polarization hologram element 53b. Fig. 17 is a diagram schematically showing the hologram pattern of the first polarization diffraction element 53b.

As shown in Fig. 17, the hologram pattern of the first polarization diffraction element 53b is constituted by three regions: an inner region 123, an outer region 124, and a semicircular region 125. The semicircular region 125 is one of the two regions into which the hologram pattern of the first polarization diffraction element 53b has been divided by a boundary line 126 extending in the x direction corresponding to the tracking direction. The inner region 123 and the outer region 124 are obtained by dividing the other one of the two regions by a circular arc boundary line.

The respective lattice pitches of the three regions of the first polarization diffraction element 53b are as follows: The pitch of the region 125 is larger than the pitch of the region 124 (having the largest angle of diffraction) and smaller than the pitch of the region 123 (having the smallest angle of diffraction). A spherical aberration error signal (SAES) for use in correction of a spherical aberration can be detected by using at least one of the positive and negative first-order diffracted light beams emitted from the region 123 and the region 124 (together constituting a spherical aberration error signal detecting section). Further, a focus error signal (FES) for use in correction of a focal displacement can be detected according to a knife-edge method using at least one of the positive and negative first-order diffracted light beams emitted from the region 125.

Further, the second polarization hologram element 53a and the first polarization hologram element 53b can be integrally prepared by accurately positioning them with mask precision. Therefore, at the same time as the position of the first polarization hologram element 53b is adjusted so that a predetermined servo signal is obtained, a positional adjustment of the second polarization hologram element 53a is completed. This brings about an effect of making it easy to assemble and adjust the integrated optical unit 200 and an effect of improving the precision of the adjustment.

The following describes, with reference to Figs. 18(a) and 18(b), the relationship between the pattern in which the first polarization diffraction element 53a is divided and the pattern of light-receiving sections of the photodetector 54.

Fig. 18(a) shows a beam of light so converged on the photodetector 54 as to be focused on a recording layer of an optical disk in such a state that the position of the collimator lens 12 is adjusted in the optical-axis direction lest a beam of light converged by the first objective lens 15 has any spherical aberration with respect to the thickness of a cover layer of the optical disk. Furthermore, Fig. 18(a) also shows the relationship between the three regions 123 to 125 of the first polarization hologram element 53a and the direction in which first-order diffracted light travels. In practice, the first polarization hologram element 53b is disposed so that its center corresponds to the respective centers of light-receiving sections 54a to 54d. However, in Fig. 18(a), the first polarization hologram element 53b is displaced in the y direction for illustrative purposes.

The photodetector 54 is constituted by fourteen light-receiving sections 54a to 54n. Three light beams formed by the second polarization hologram element 53a in a forward path optical system (converging optical system) are reflected by an optical disk, and then are split into non-diffracted light beams (zeroth-order diffracted light beams) and diffracted light beams (positive first-order diffracted light beams) by the first polarization hologram element 53b in a backward path optical system (detecting optical system). Then, the photodetector 54 can detect an RF signal and a servo signal. Specifically, the first polarization hologram element 53b forms a total of twelve beams: three non-diffracted light beams (zeroth-order diffracted light beams) and nine positive first-order diffracted light beams. Among them, the non-diffracted light beams (zeroth-order diffracted light beams) are designed to have such a degree of size that a TES can be detected according to a push-pull method. Therefore, the photodetector 54 is displaced so as to be slightly short of or farther than the respective focal points of the non-diffracted light beams. In this description, the photodetector 54 is displaced so as to be farther than the respective focal points of the non-diffracted light beams. As described above, a light beam having a certain degree of size is converged on respective boundary portions of the light-receiving sections 54a to 54d. Therefore, the respective positions of the non-diffracted light beams and the light-receiving element can be adjusted by making such an adjustment that respective outputs of the four light-receiving sections are equalized.

Fig. 18(b) shows a beam of light converged on the photodetector 54 in cases where the first objective lens 15 is moved toward the optical disk. The light beams become larger but do not protrude from the light-receiving sections.

The following describes, with reference to Figs. 18(a) and 18(b), an operation of generating a servo signal. The light-receiving sections 54a to 54n output signals Sa to Sn, respectively.

The RF signal (RF) is detected by using the non-diffracted light beams.

$$RF = Sa + Sb + Sc + Sd$$

The tracking error signal (TES1) according to the DPP method is detected by comparing the respective phases of Sa to Sd.

The tracking error signal (TES2) according to the DPP method is detected according to the following formula:

$$TES2 = \{(Sa+Sb)-(Sc+Sd)\} - \alpha\{(Se-Sf)+(Sg-Sh)\}$$

Note that a is set to be a coefficient best suited for canceling an offset caused by an objective lens shift or a disk tilt.

The focus error signal (FES) is detected by using a double knife-edge method.

$$FES = (Sm-Sn) - \{(Sk+Si)-(Sl+Sj)\}$$

The spherical aberration error signal (SAES) is detected by using a signal detected from a light beam split into inner and outer portions.

$$SAES = (Sk-Sl)-\beta(Sm-Sn)$$

Note that β is set to be a coefficient best suited for canceling an offset of SAES.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 described above is obtained in the optical system in which a beam is emitted from the light source 41 and converged by the objective lens 35, so that stable tracking control becomes possible between the inner circumference and the outer circumference.

[Embodiment 8]

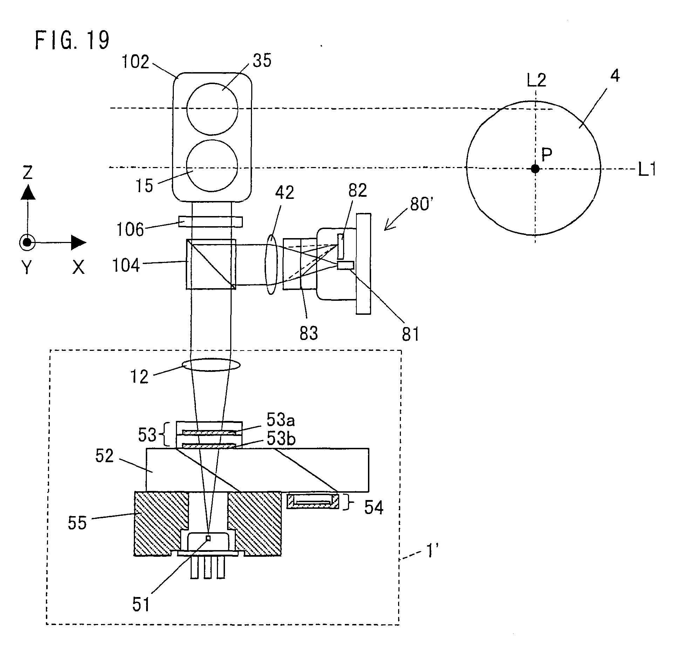

Another embodiment of the present invention will be described below with reference to Fig. 19. Fig. 19 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 7 are given the same reference numerals, and will not be described below. Furthermore, the positional relationship between a first objective lens and a second objective lens in the present embodiment is the same as in Fig. 11 of Embodiment 3, and therefore will not be described below.

The present optical pick-up differs from Embodiment 7 in that the present optical pick-up uses, as a first optical system, a hologram laser unit integrally constituted by a light source, a hologram element, and a photodetector.

The first optical system of the present optical pick-up is identical to that shown in Fig. 15, and therefore will be described below. The second optical system of the present optical pick-up is identical to that shown in Fig. 14, and therefore will not be described below.

According to this arrangement, a waveform similar to that obtained in Embodiment 1 is obtained in the optical system in which a beam is emitted from the objective lens 15, so that stable tracking control becomes possible between the inner circumference to the outer circumference of an optical disk. Further, a waveform similar to that obtained in Embodiment 1 described above is obtained in the optical system in which a beam is emitted from the light source 81 and converged by the objective lens 35, so that stable tracking control becomes possible between the inner circumference and the outer circumference.

[Embodiment 9]

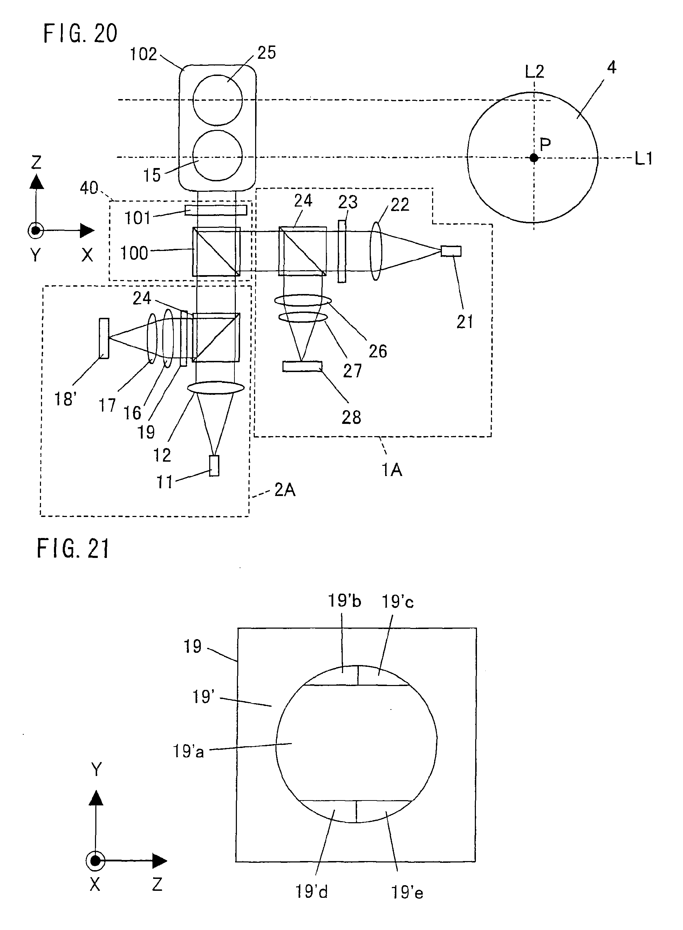

Another embodiment of the present invention will be described below with reference to Fig. 20. Fig. 20 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 8 are given the same reference numerals, and will not be described below.

In each of the foregoing embodiments, a phase shift DPP method is employed in a second optical system including a second objective lens placed in an offset position. On the other hand, in the present embodiment, the phase shift DPP method is employed in a first optical system. Note that a first objective lens provided in the first optical system is disposed on a central line extending from the center of an optical disk in the radial direction in which the optical pick-up is moved (i.e., is not placed in an offset position).

The present optical pick-up includes a second optical system that employs a one-beam method instead of the phase shift DPP method. As shown in Fig. 20, in the second optical system 2A, no three-beam-generating diffraction grating is provided in a forward path extending from the light source 11 to the second objective lens 25. In this respect, the present embodiment differs from Embodiments 1 to 8 in each of which a hologram element (three-beam-generating diffraction grating) is provided in front of a light-receiving element.

Further, the first optical system 1A shown in Fig. 20 is identical to the second optical system 2 shown in Fig. 1, except that the first optical system 1A shown in Fig. 20 includes a first objective lens 15, and therefore will not be described below.

The present optical pick-up may be arranged such that a normal DPP method is employed in the first optical system. That is, the second diffraction grating 23 shown in Fig. 20 may be arranged (for example, as shown in Fig. 2) so as to include a three-beam-generating diffraction grating having no phase shift region. However, in order to increase the amount by which the position of the first objective lens 15 is allowed to be adjusted in the z direction, it is preferable that the phase shift DPP method be used in the first optical system.

As described above, in an optical pick-up including two objective lens, the amplitude of a DPP signal obtained from respective spots of MB, SB1, and SB2 each converged by a second objective lens placed in an offset position is unstable. This causes a problem of destabilization of tracking control on the respective spots of MB, SB1, and SB2 each converged by the second objective lens.

The present optical pick-up solves the foregoing problem by employing the one-beam method using neither SB1 nor SB2 for tracking control performed by the second optical system including the second objective lens. Moreover, by employing the phase shift DPP method in tracking control performed by the first optical system including the first objective lens, an attempt is made to increase the amount by which the position of the first objective lens is allowed to be adjusted in the z direction. In the following, the arrangement of the present optical pick-up will be described more in detail.

The present optical pick-up includes the first optical system 1A including the first objective lens 15, the second optical system 2A including the second objective lens 25, and a common optical system 40. In the present optical pick-up, a beam emitted from the first optical system 1A and a beam emitted from the second optical system 2A enter the common optical system 40.

The second optical system 2A is arranged in the same manner as the first optical system 1 shown in Fig. 1, except that the second optical system 2A includes a hologram element 19 instead of the first diffraction grating 13. That is, the second optical system 2A includes a light source 11, a collimator lens 12, a polarizing beam splitter 14, a second objective lens 25, a hologram element 19, a converging lens 16, a cylindrical lens 17, and a photodetector 18'. In the present optical pick-up, the hologram element 19 serves as a hologram element for detecting the shift amount by which the second objective lens is shifted in the radial direction of an optical recording medium.

As shown in Fig. 20, a beam emitted from the light source 11 is converted into parallel light by the collimator lens 12. Then, the beam passes through the polarizing beam splitter 14, and then enters the common optical system 40. The light having entered the common optical system 40 is transmitted by a dichroic prism 100 so as to have the same optical axis as does the beam emitted from the first optical system 1A, and then is converted from linearly-polarized light into circularly-polarized light by a quarter wavelength plate 101. Thereafter, the beam is converged on a second optical disk via the second objective lens 25.

The beam converged on the second optical disk is reflected, and then becomes return light that returns to the second optical system 2A. This return light passes through the second objective lens 25, and then is converted from circularly-polarized light into linearly-polarized light by the quarter wavelength plate 101. Then, the return light enters the second optical system 2A after having passed through the dichroic prism 100. In the second optical system 2A, the return light is reflected by the polarizing beam splitter 14, diffracted by the hologram element 19, and then guided to the photodetector 18' via the converging lens 16 and the cylindrical lens 17. The photodetector 18' detects a focus error signal, a radial error signal, and a reproduction signal.

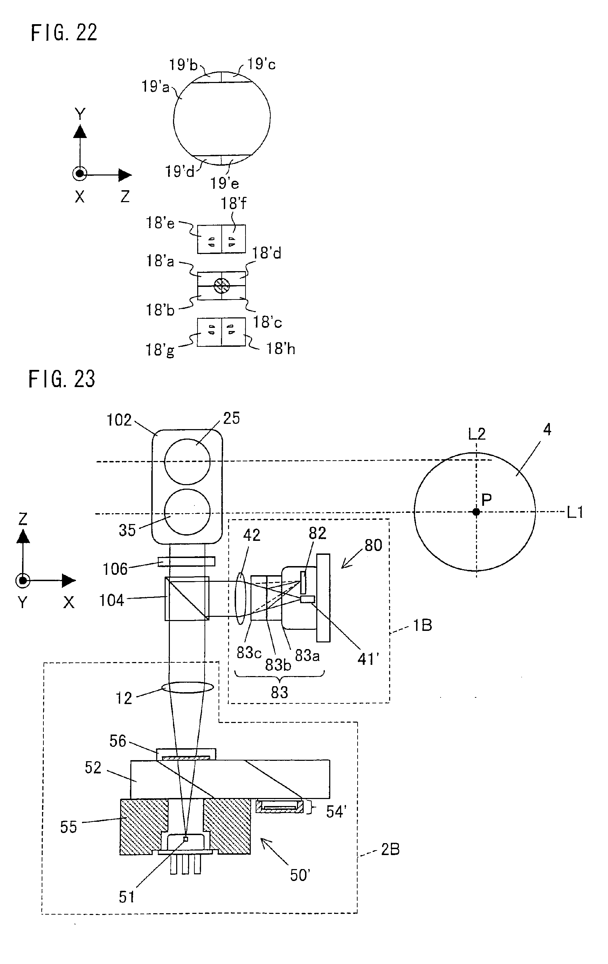

The following describes, with reference to Figs. 21 and 22, how the present optical pick-up operates in generating a focus error signal, a radial error signal, and a reproduction signal. Fig. 21 is a diagram showing a hologram pattern formed on the hologram element 19. As shown in Fig. 21, the hologram pattern 19' is divided into five regions 19'a to 19'e. Among the five regions 19'a to 19'e, the regions 19'b to 19'e serve as regions necessary for detecting a shift signal for detecting the shift amount by which the second objective lens is shifted in the radial direction of the optical recording medium.

That is, as shown in Fig. 21, the hologram pattern 19' is divided by two dividing lines extending in parallel with the radial direction (z direction), and the region 19'a is a region that lies between the two dividing lines (i.e., a region that is defined by the two dividing line). Moreover, as a result of the division, two regions are formed on both outer sides of the region 19'a, respectively. The two regions are divided by a dividing line perpendicular to the z direction (the dividing line extending in the y direction in Fig. 21). This results in the four regions 19'b to 19'e. Note that the dividing line perpendicular to the z direction that divides the four regions 19'b to 19'e from one another dose not pass through the region 19'a. Among the five regions 19'a to 19'e thus divided from one another, the regions 19'b to 19'e serve as regions necessary for detecting a shift signal for detecting the shift amount by which the second objective lens is shifted in the radial direction of the optical recording medium.

Fig. 22 is an explanatory diagram showing the respective shapes of light-receiving sections of the photodetector 18' and the way in which the photodetector 18' receives light. As shown in Fig. 22, a zeroth-order diffracted light beam (non-diffracted light) (i.e., return light that passes through the hologram element 19') contained in return light diffracted by the hologram pattern 19' of the hologram element 19 is received by light-receiving sections 18'a to 18'd. Further, positive and negative first-order diffracted light beams contained in return light diffracted by the regions 19'b and 19'e are received by light-receiving sections 18'e and 18'h, respectively. Moreover, positive and negative first-order diffracted light beams contained in return light diffracted by the regions 19'c and 19'd are received by light-receiving sections 18'f and 18'g, respectively. Note the light-receiving sections 18'a to 18'h output signals Sa to Sh, respectively.

The RF signal (RF) generated at the time of performing recording or reproduction with respect to the second optical disk can be detected according to the following formula:

$$RF=Sa+Sb+Sc+Sd$$

Further, the tracking error signal (TES3) generated at the time of performing recording or reproduction with respect to the second optical disk can be detected according to the following formula:

$$TES3=\{(Sa+Sb)-(Sc+Sd)\}-\gamma\{(Se-Sf)+(Sg-Sh)\}$$

where γ is set to be a coefficient best suited for canceling an offset caused by an objective lens shift.

The focus error signal (FES) generated at the time of performing recording or reproduction with respect to the second optical disk can be detected, with use of an astigmatism method, according to the following formula:

$$FES=(Sa+Sc)-(Sb+Sd)$$

The present optical pick-up is arranged such that the second optical system does not generate beams SB1 and SB2 and generates only a beam MB. For this reason, the tracking error signal is identical to the signal MPP shown in Fig. 4 in Embodiment 1. Moreover, the signal MPP is not affected by the signal SPP, so that the amplitude of the signal MPP is not changed.

Further, a signal corresponding to an objective lens shift is generated at the light-receiving sections 18'e to 18'h, so that it is possible to cancel the influence of the objective lens shift. Therefore, the optical system (second optical system) in which return light is emitted from the second objective lens 25 allows for stable tracking control between the inner circumference to the outer circumference of an optical disk.

Further, a waveform similar to that obtained in Embodiment 1 is obtained in the optical system in which a beam is emitted from the light source 11 and converged by the first objective lens 15, so that stable tracking control becomes possible between the inner circumference and the outer circumference.

Furthermore, the one-beam method is employed in the second optical system including the second objective lens placed in an offset position, and the phase-shift DPP method is employed in the first optical system including the first objective lens placed on the central axis. Therefore, a position error in the z-axis direction is only lightly affected by the tracking control methods respectively employed in the optical systems. This makes it possible to increase the amount by which an adjustment is allowed in mounting the optical pick-up in a mechanism (a mechanical section for moving the optical pick-up in the radial direction) of the recording and reproduction apparatus.

[Embodiment 10]

Another embodiment of the present invention will be described below with reference to Figs. 23 through 25. Fig. 23 is a schematic diagram showing a light path of an optical pick-up according to the present embodiment (such an optical pick-up being hereinafter referred to as "present optical pick-up"). For convenience of explanation, members having the same functions as those shown in the drawings of Embodiments 1 to 9 are given the same reference numerals, and will not be described below. Furthermore, the positional relationship between a first objective lens and a second objective lens in the present embodiment is the same as in Fig. 20 of Embodiment 9, and therefore will not be described below.

The present optical pick-up differs from Embodiment 9 in that the present optical pick-up includes, instead of the second optical system 2A shown in Fig. 20, an integrated optical unit in which optical components are integrated. Furthermore, the present optical pick-up employs a first optical system (the first optical system shown in Fig. 14) arranged so as to include a light source capable of emitting beams of different wavelengths from a single package. However, the first optical system of the present optical pick-up is not limited to this arrangement.

Note that the first optical system 1B of the present optical pick-up is arranged so as to include a hologram laser unit 80, shown in Fig. 14, which is integrally constituted by a light source 81, a hologram element 83, and a photodetector 82. Therefore, the first optical system 1B has the same functions as those of the hologram laser unit 80 described in Embodiment 6, and therefore will not be described here. The following describes a second optical system 2B, which is a feature component of the present optical pick-up.

As shown in Fig. 23, the second optical system 2B includes an integrated optical unit 50' and a collimator lens 12.

A beam emitted from the integrated optical unit 50' is converted into parallel light by the collimator lens 12.

Then, the beam passes through a dichroic prism 104, and then is converted from linearly-polarized light into circularly-polarized light by a quarter wavelength plate 106. Then, the beam is converged on a second optical disk via a second objective lens 25.

The beam thus converged on the second optical disk is reflected, and then becomes return light that returns to the second optical system 2B. This return light passes through the second objective lens 25, and then is converted from circularly-polarized light into linearly-polarized light by the quarter wavelength plate 106. Then, the return light enters the second optical system 2B after having passed through the dichroic prism 104. In the second optical system 2B, the return light is converged on a photodetector 54' provided in the integrated optical unit 50'. In the present optical pick-up, the return light reflected from the second optical disk is detected by the photodetector 54', so that a focus error signal, a tracking error signal, a spherical aberration signal, and a reproduction signal each generated at the time of performing recording or reproduction with respect to the second optical disk are obtained.

The following fully describes a structure of the integrated optical unit 50' provided in the second optical system 2B. The integrated optical unit 50' includes a light source 51, the photodetector 54', a polarizing beam splitter 52, a hologram element 56, and a holding member 55. The holding member 55 holds the light source 51 therein. Furthermore, the holding member 55 is provided with a beam outlet 55a via which a beam emitted from the light source 51 is guided to a first optical disk. Further, the holding member 55 is arranged so that the light source 51 can be inserted into the holding member 55, and is shaped so that the polarizing beam splitter 52 can be fixed to the holding member 55.

For convenience of explanation, the following description assumes that that surface of the polarizing beam slitter 52 which the beam emitted from the light source 51 enters is a beam entrance surface of the polarizing beam splitter 52 and that that surface of the polarizing beam splitter 52 which the return light enters is a return-light entrance surface of the polarizing beam splitter 52.

As shown in Fig. 23, the polarizing beam splitter 52 is disposed on the holding member 55. Moreover, the polarizing beam splitter 52 is disposed on the holding member 55 so that the beam entrance surface covers the beam outlet 55a. Further, the hologram element 56 is provided on the return-light entrance surface of the polarizing beam splitter 52 so as to be positioned on the optical axis of the beam emitted from the light source 51. Further, the photodetector 54' is provided on the beam entrance surface of the polarizing beam splitter 52. In the integrated optical unit 50', a beam-emitting section of the light source 51 and a light-receiving section of the photodetector 54' are disposed so that a light path of the beam emitted from the light source 51 and a light path of the return light to be received by the photodetector 54' are secured.

The following describes a path through which a beam passes in the integrated optical unit 200.

The light source 51 emits a P-polarized light beam, which is a type of linearly-polarized light beam. The P-polarized light beam emitted from the light source 51 passes through the polarizing beam splitter 52.

Note that a hologram pattern of a hologram region of the hologram element 56 will be described later in detail.

As described above, the beam thus emitted from the integrated optical unit 50' is converted from linearly-polarized light into circularly-polarized light by the quarter wavelength plate 106, and then is converged on the second optical disk. Then, the return light reflected from the second optical disk is converted from circularly-polarized light into linearly-polarized light by the quarter wavelength plate 106, and then enters the integrated optical unit 50'.

Then, on entering the hologram element 56, the return light is diffracted so as to be split into a zeroth-order diffracted light beam (non-diffracted light beam) and plus and positive first-order diffracted light beams (diffracted light beams), and then enters the polarizing beam splitter 52. Then, the return light thus split into the zeroth-order diffracted light beam (non-diffracted light beam) and the first-order diffracted light beams (diffracted light beams) is reflected by the polarizing beam splitter 52, and then enters the photodetector 54'.

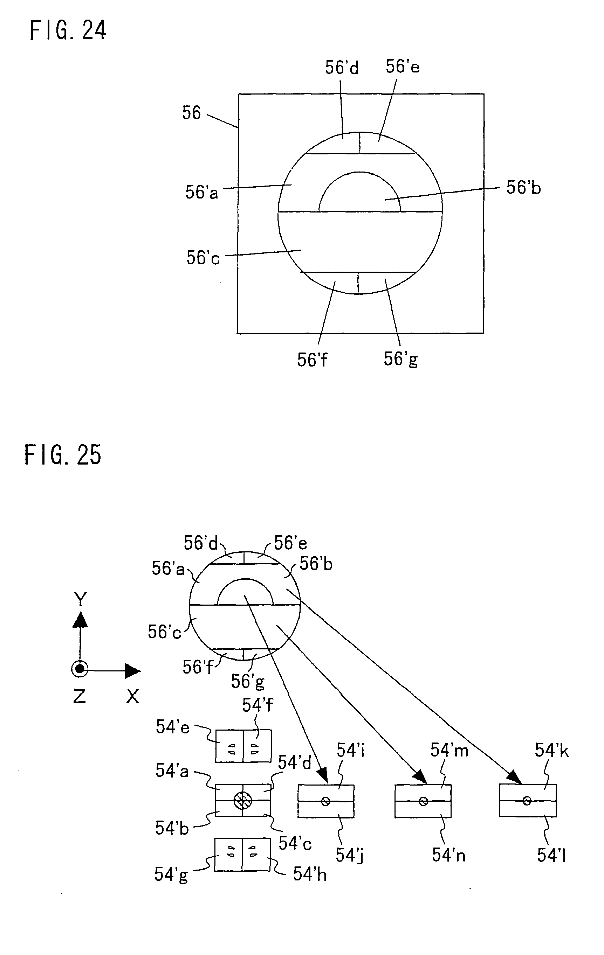

The following describes, with reference to Fig. 24, the hologram pattern formed on the hologram element 56.

As shown in Fig. 24, the hologram pattern of the hologram element 56 is constituted by seven regions 56a to 56g.

A spherical aberration error signal (SAES) for use in correction of a spherical aberration can be detected by using at least one of the positive and negative first-order diffracted light beams emitted from the region 56a and the region 56b (together constituting a spherical aberration error signal detecting section). Further, a focus error signal (FES) for use in correction of a focal displacement can be detected according to a knife-edge method using at least one of the positive and negative first-order diffracted light beams emitted from the region 56c.

The following describes, with reference to Fig. 25, the relationship between the pattern in which the hologram element 56 is divided and the pattern of light-receiving sections of the photodetector 54'.

Fig. 25 shows a beam of light so converged on the photodetector 54' as to be focused on a recording layer of an optical disk in such a state that the position of the collimator lens 12 is adjusted in the optical-axis direction lest a beam of light converged by the second objective lens 25 has any spherical aberration with respect to the thickness of a cover layer of the optical disk. In practice, the hologram element 56 is disposed so that its center corresponds to the respective centers of light-receiving sections 54'a to 54'd. However, in Fig. 25, the hologram element 56 is displaced in the y direction for illustrative purposes.

The photodetector 54' is constituted by fourteen light-receiving sections 54'a to 54'n. The return light reflected from the second optical disk is split into non-diffracted light beams (zeroth-order diffracted light beams) and diffracted light beams (positive first-order diffracted light beams) by the hologram element 56 in a backward path optical system (detecting optical system). Then, the photodetector 54 can detect an RF signal and a servo signal. The non-diffracted light beams (zeroth-order diffracted light beams) are designed to have such a degree of size that a TES can be detected according to a push-pull method. Therefore, the photodetector 54 is displaced so as to be slightly short of or farther than the respective focal points of the non-diffracted light beams. In this description, the photodetector 54 is displaced so as to be farther than the respective focal points of the non-diffracted light beams. As described above, a light beam having a certain degree of size is converged on respective boundary portions of the light-receiving sections 54'a to 54'd. Therefore, the respective positions of the non-diffracted light and the light-receiving element can be adjusted by making such an adjustment that respective outputs of the four light-receiving sections are equalized. Further, light diffracted by the regions 56'd to 56'g is received in the same manner as in Embodiment 9, and therefore will not be described here.

The following describes, with reference to Fig. 25, an operation of generating a serve signal. The light-receiving sections 54'a to 54'n output signals Sa to Sn, respectively.

The RF signal (RF) is detected by using the non-diffracted light beams.

$$RF = Sa + Sb + Sc + Sd$$

The tracking signal error signal (TES1) according to the DPP method is detected by comparing the respective phases of Sa to Sd.

The tracking error signal (TES2) according to the phase-shift DPP method is detected according to the following formula:

$$TES2 = \{(Sa + Sb) - (Sc + Sd)\} - \alpha\{(Se - Sf) + (Sg - Sh)\}$$

Note that a is set to be a coefficient best suited for canceling an offset caused by an objective lens shift or an optical disk tilt.

The focus error signal (FES) is detected by using the double knife edge method.

$$FES = (Sm - Sn) - \{(Sk + Si) - (Sl + Sj)\}$$

The spherical aberration error signal (SAES) is detected by using a signal detected from a light beam split into inner and outer portions.

$$SAES = (Sk - Sl) - \beta(Sm - Sn)$$

Note that $\beta$ is set to be a coefficient best suited for canceling an offset of SAES.

According to this arrangement, a waveform similar to that obtained in Embodiment 9 is obtained in the optical system in which a beam is emitted from the objective lens 25, so that stable tracking control is allowed between the inner circumference to the outer circumference of an optical disk. Further, a waveform similar to that obtained in Embodiment 1 is obtained in the optical system in which a beam is emitted from the light source 41' and converged by the objective lens 35, so that stable tracking control becomes possible between the inner circumference and the outer circumference.

The present invention is not limited to the description of the embodiments above, but may be altered by a skilled person within the scope of the claims. An embodiment based on a proper combination of technical means disclosed in different embodiments is encompassed in the technical scope of the present invention.

As described above, an optical pick-up of the present invention includes: a first optical system having (i) a first light source which emits a first beam having a first wavelength, (ii) a first converging element which converges the first beam on the optical recording medium, and (iii) a first photodetector which detects a push-pull signal from reflected light obtained when the first beam is reflected by the optical recording medium; and a second optical system having (a) a second light source which emits a second beam having a second wavelength, (b) a second converging element which converges the second beam on the optical recording medium, and (c) a second photodetector which detects a push-pull signal from reflected light obtained when the second beam is reflected by the optical recording medium, whereas the first converging element is placed on a central line so drawn as to extend in the radial direction in which the optical pick-up is moved from a central axis of the optical recording medium, the second converging element being placed in an offset position offset from the central line, at least either of the first optical system and the second optical system having a diffraction element provided in a light path via which the beam is converged on the optical recording medium, which diffraction element splits the beam into a main beam and at least one sub-beam, the diffraction element having a phase shift region that gives a phase difference to the beam passing through the diffraction element.

Therefore, the amplitude of the push-pull signal detected from the reflected light obtained by reflecting the sub-beam stays substantially 0 between the inner circumference to the outer circumference of the optical recording medium. For this reason, the amplitude of the tracking error signal obtained from the respective spots of the main beam and the sub-beam each converged on the converging element placed in the offset position becomes stable between the inner circumference to the outer circumference of the optical recording medium. This makes it possible to realize stable tracking control.

Further, in cases where the first optical system is provided with the diffraction element, it is possible to increase the amount by which the position of the first converging element is allowed to be adjusted so that the first converging element is positioned on the central line.

Further, the optical pick-up of the present invention is arranged such that in the second optical system, the second beam emitted from the second light source is solely converged on the optical recording medium.

As described above, the optical pick-up of the present invention is arranged such that the second optical system is subjected to tracking control according to a one-beam method, so that there is no change in amplitude of the tracking error signal between the inner circumference and the outer circumference. This makes it possible to realize stable tracking control.

The optical pick-up of the present invention is preferably arranged such that the first optical system includes an integrated optical unit integrally constituted by the first light source and the first photodetector. Further, the optical pick-up of the present invention is preferably arranged such that the second optical system includes a hologram laser unit integrally constituted by the second light source and the second photodetector. This makes it possible to reduce the size of the optical pick-up.

Further, the optical pick-up of the present invention is arranged such that in the second optical system, the second beam emitted from the second light source is solely converged on the optical recording medium.

According to the foregoing arrangement, in the second optical system having the second converging element placed in the offset position, the second beam emitted from the second light source is solely converged on the optical recording medium. That is, according to the foregoing arrangement, the second optical system is not provided with a diffraction element (three-beam-generating diffraction element), positioned in a light path via which the beam is converged on the optical recording medium, which splits the beam into a main beam and at least one sub-beam. In other words, according to the foregoing arrangement, the second optical system employs tracking control according to the one-beam method. Therefore, in the second optical system, only one beam (main beam) is reflected from the optical recording medium and the sub-beam is not reflected. Therefore, the amplitude of the tracking error signal becomes stable between the inner circumference and the outer circumference of the optical recording medium. This makes it possible to realize stable tracking control.

The optical pick-up of the present invention is preferably arranged so as to further include a hologram element for detecting a shift amount by which the second converging element is shifted in the radial direction of the optical recording medium. With this, at the time of tracking control according to the one-beam method, the shift amount can be detected without further dividing the light-receiving element.

The optical pick-up of the present invention is preferably arranged such that the hologram element is provided with a dividing line for detecting a spherical aberration signal. This makes it possible to use the light-receiving element to detect the amount of spherical aberration caused due to an error in thickness of a cover glass of the optical pick-up, thereby making it possible to quickly correct the spherical aberration.

The optical pick-up of the present invention is preferably arranged such that the first wavelength is shorter than the second wavelength.

Generally, the shorter is the wavelength of a beam emitted from a light source, the narrower is the track pitch of an optical recording medium to be subjected to recording or reproduction by the beam. The narrowing of the track pitch of the optical recording medium has a big influence on tracking error signal detection. According to the foregoing arrangement, the first wavelength is shorter than the second wavelength. That is, the first optical system including the first converging element placed on the central line extending in the radial direction in which the optical pick-up is moved is employed as an optical system including a light source that emits a beam having a relatively short wavelength. Therefore, as compared with a case where the second converging element placed in the offset position is employed (as an optical system including a light source that emits a beam having a relatively short wavelength), tracking control can be stabilized.

The optical pick-up of the present invention is preferably arranged such that the first photodetector includes a spherical aberration error signal detection section for detecting a spherical aberration error signal.

The BD uses a converging element having a relatively high numerical aperture, and therefore is greatly affected by a spherical aberration attributed to an error in thickness of the cover glass of the optical recording medium. Therefore, in cases where a light source that emits light to a BD is used as the first light source, it is necessary to correct a spherical aberration. According to the foregoing arrangement, the first photodetector includes a spherical aberration error signal detection section which detects a spherical aberration error signal. This makes it possible to quickly correct a spherical aberration.

The optical pick-up of the present invention is preferably arranged such that the first photodetector includes a spherical aberration correction section for correcting a spherical aberration in accordance with the spherical aberration error signal detected by the spherical aberration error signal detection section.

According to the foregoing arrangement, the first photodetector includes a spherical aberration correction section which corrects a spherical aberration in accordance with the spherical aberration error signal detected by the spherical aberration error signal detection section. This makes it possible to correct a spherical aberration attributed to variations in thickness among respective cover glasses of optical recording media and variations caused within a single optical recording medium.

The optical pick-up of the present invention is preferably arranged such that: the first optical system and the second optical system are provided with only one photodetector; and the photodetector receives light reflected from the optical recording medium in the first optical system and the second optical system. This arrangement makes it possible to further reduce the size of the optical pick-up.

The optical pick-up of the present invention is preferably arranged so as to include a third optical system having (i) a third light source which emits a third beam having a third wavelength, (ii) a third diffraction element by which the third beam emitted from the third light source is split into a main beam and at least one sub-beam, and (iii) a third photodetector which detects a push-pull signal from light reflected from the optical recording medium, wherein: the second converging element is solely provided in the second optical system and the third optical system so as to converge, on the optical recording medium, the beam divided split by the third diffraction element; and the third diffraction element has a phase shift region that gives a phase difference to the beam passing through the third diffraction element; and the phase shift region is designed so that amplitude of a push-pull signal detected from reflected light obtained by reflecting the sub-beam is substantially 0.

The third diffraction element has a phase shift region that gives a phase difference to the beam passing through the third diffraction element, and the phase shift region is designed so that the amplitude of a push-pull signal detected from reflected light obtained by reflecting the sub-beam is substantially 0. Therefore, the push-pull signal detected from the reflected light obtained by reflecting the sub-beam always stays substantially 0 between the inner circumference and the outer circumference of the optical recording medium. Therefore, according to the foregoing arrangement, the amplitude of a tracking error signal obtained from respective spots of the main beam and the sub-beam each converged by the second converging element becomes stable between the inner circumference to the outer circumference of the optical recording medium. This makes it possible to realize stable tracking control.

The optical pick-up of the present invention is preferably arranged such that the third optical system includes a hologram laser unit integrally constituted by the third light source, the third diffraction element, and the third photodetector. This makes it possible to reduce the size of the optical pick-up.

As described above, according to the foregoing arrangement, the phase shift DPP method is employed in performing tracking control by using the first optical system, the second optical system, or the third optical system.

In cases where such a phase shift DPP method is employed, it is preferable that the phase shift region of the diffraction element be arranged in the following manner.

That is, the optical pick-up of the present invention is preferably arranged such that the diffraction element is divided into (i) a first region provided with a first lattice pattern and (ii) a second region provided with a second lattice pattern which has a lattice groove displaced by a half pitch from a lattice groove of the first lattice pattern.

According to the foregoing arrangement, the diffraction element is arranged such that the second region is provided with a second lattice pattern which has a lattice groove displaced by a half pitch from a lattice groove of the first lattice pattern. That is, a land and a groove together serving as a pattern groove in the first region are reversed with respect to a land and a groove together serving as a pattern groove in the second region. Such an arrangement causes the first region and the second region to be out of phase by 180 degrees with respect to each other. Therefore, in cases where the second region is a region in which no phase difference is added, the first region (phase shift region) is a region in which a phase difference of 180° has been added.

When a beam emitted from the first, second, or third optical system is split into a main beam and two sub-beams by the diffraction element, the main beam, which is a zeroth-order diffracted light beam, passes through the diffraction element with its phase unchanged. On the other hand, the two sub-beams, which are respectively plus and minus first-order diffracted light beams, are diffracted by the phase shift region of the diffraction element, so that a phase difference of +180° and a phase difference of -180° are respectively added to the sub-beams. That is, the two sub-beams diffracted in the first region serving as a first lattice pattern are out of phase by 180 degrees with respect to the two sub-beams diffracted in the second region serving as a second lattice pattern, respectively. For this reason, the amplitude of a push-pull signal detected from reflected light obtained by reflecting such two beams is substantially 0. Therefore, according to the foregoing arrangement, the amplitude of a tracking error signal obtained from respective spots of a main beam and two sub-beams each converged by the second converging element becomes stable between the inner circumference to the outer circumference of the optical recording medium. This makes it possible to realize stable tracking control.

The optical pick-up of the present invention is preferably arranged such that the second light source is a dual-wavelength laser which emits beams having different wavelengths. This makes it possible to further reduce the size of the optical pick-up.

The present invention can be applied to an optical pick-up which, even in an optical system having a plurality of objective lenses, allows for stable tracking control between the inner circumference and the outer circumference of an optical disk.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

**Claims**

1. An optical pick-up capable of being moved in a radial direction of an optical recording medium, the optical pick-up being **characterized by** comprising:

   a first optical system (1, 1') having (i) a first light source (11) which emits a first beam having a first wavelength, (ii) a first converging element (15) which converges the first beam on the optical recording medium, and (iii) a first photodetector (18) which detects a push-pull signal from reflected light obtained when the first beam is reflected by the optical recording medium; and
   a second optical system (2) having (a) a second light source (21) which emits a second beam having a second wavelength, (b) a second converging element (25, 35) which converges the second beam on the optical recording medium, and (c) a second photodetector (28) which detects a push-pull signal from reflected light obtained when the second beam is reflected by the optical recording medium,

   whereas the first converging element (15) is placed on a central line (L1) so drawn as to extend in the radial direction in which the optical pick-up is moved from a central axis of the optical recording medium, the second converging element (25, 35) being placed in an offset position offset from the central line (L1),
   at least either of the first optical system and the second optical system having a diffraction element (13, 23) provided in a light path via which the beam is converged on the optical recording medium, which diffraction element splits the beam into a main beam and at least one sub-beam,
   the diffraction element having a phase shift region that gives a phase difference to the beam passing through the diffraction element.

2. The optical pick-up as set forth in claim 1, wherein the phase shift region (122) is designed so that amplitude of a push-pull signal detected form reflected light obtained by reflecting the sub-beam is substantially 0.

3. The optical pick-up as set forth in claim 1 or 2, wherein the first optical system (1') includes an integrated optical unit (200) integrally constituted by the first light source (51) and the first photodetector (54).

4. The optical pick-up as set forth in any one of claims 1 to 3, wherein the second optical system (2') includes a hologram laser unit (20') integrally constituted by the second light source (21') and the second photodetector (28').

5. The optical pick-up as set forth in claim 1, wherein in the second optical system (2A), the second beam emitted from the second light source is solely converged on the optical recording medium.

6. The optical pick-up as set forth in claim 5, further comprising a hologram element (19) for detecting a shift amount by which the second converging element (25) is shifted in the radial direction of the optical recording medium.

**7.** The optical pick-up as set forth in claim 6, wherein the hologram element (19) is provided with a dividing line for detecting a spherical aberration signal.

**8.** The optical pick-up as set forth in any one of claims 1 to 7, wherein the first wavelength is shorter than the second wavelength.

**9.** The optical pick-up as set forth in any one of claims 1 to 8, wherein the first photodetector (18) includes a spherical aberration error signal detection section (56a, 56b) for detecting a spherical aberration error signal.

**10.** The optical pick-up as set forth in claim 9, wherein the first photodetector (18) includes a spherical aberration correction section for correcting a spherical aberration in accordance with the spherical aberration error signal detected by the spherical aberration error signal detection section (56a, 56b).

**11.** The optical pick-up as set forth in any one of claims 1 to 10, wherein:

the first optical system and the second optical system are provided with only one photodetector (18, 28); and the photodetector receives light reflected from the optical recording medium in the first optical system (1) and the second optical system (2).

**12.** The optical pick-up as set forth in any one of claims 1 to 11, further comprising:

a third optical system (3) having (i) a third light source (31) which emits a third beam having a third wavelength, (ii) a third diffraction element (33) by which the third beam emitted from the third light source is split into a main beam and at least one sub-beam, and (iii) a third photodetector which detects a push-pull signal from light reflected from the optical recording medium, wherein:

the second converging element (35) is solely provided in the second optical system (2) and the third optical system so as to converge, on the optical recording medium, the beam split by the third diffraction element; and the third diffraction element has a phase shift region that gives a phase difference to the beam passing through the third diffraction element; and the phase shift region is designed so that amplitude of a push-pull signal detected from reflected light obtained by reflecting the sub-beam is substantially 0.

**13.** The optical pick-up as set forth in claim 13, wherein the third optical system includes a hologram laser unit (70) integrally constituted by the third light source (71), the third diffraction element (73), and the third photodetector (72).

**14.** The optical pick-up as set forth in any one of claims 1 to 13, wherein the diffraction element (13, 23) is divided into (i) a first region (121) provided with a first lattice pattern and (ii) a second region (122) provided with a second lattice pattern which has a lattice groove displaced by a half pitch from a lattice groove of the first lattice pattern.

**15.** The optical pick-up as set forth in any one of claims 1 to 14, wherein the second light source (81) is a dual-wavelength laser which emits beams having different wavelengths.

FIG. 1

FIG. 2

FIG. 3

FIG. 4(a)

FIG. 4(b)

FIG. 5

FIG. 6(a)

FIG. 6(b)

FIG. 7

FIG. 8

FIG. 9

FIG. 10

FIG. 11

FIG. 12

FIG. 13

FIG. 14

FIG. 15

FIG. 16

FIG. 17

FIG. 18(a)

ZEROTH-ORDER
DIFFRACTED LIGHT
(NON-DIFFRACTED LIGHT)

POSITIVE FIRST-ORDER
DIFFRACTED LIGHT
(DIFFRACTED LIGHT)

FIG. 18(b)

ZEROTH-ORDER
DIFFRACTED LIGHT
(NON-DIFFRACTED LIGHT)

POSITIVE FIRST-ORDER
DIFFRACTED LIGHT
(DIFFRACTED LIGHT)

FIG. 19

FIG. 20

FIG. 21

FIG. 22

FIG. 23

FIG. 24

FIG. 25

FIG. 26

FIG. 27

CENTRAL AXIS OF OPTICAL DISK

FIG. 28

FIG. 29

FIG. 30

FIG. 31

FIG. 32 (a)

FIG. 32 (b)

L1

CENTRAL AXIS
OF OPTICAL DISK

SB1

MB

SB2

L1

CENTRAL AXIS
OF OPTICAL DISK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2626205 B
- JP 7093764 A

- WO 2001250250 A